# EUROPÄISCHE PATENTSCHRIFT

(11) **EP 2 911 926 B1**
(45) Veröffentlichungstag und Bekanntmachung des Hinweises auf die Patenterteilung: **07.09.2016**
(21) Anmeldenummer: 13788672.7
(22) Anmeldetag: 24.10.2013
(51) Int. Cl.: B60W 30/08, G08G 1/0965, G05D 1/00, G08G 1/16, B60W 30/00

(54) **VERFAHREN ZUR KOORDINIERUNG DES BETRIEBS VON VOLLAUTOMATISIERT FAHRENDEN KRAFTFAHRZEUGEN**
METHOD FOR COORDINATING THE OPERATION OF MOTOR VEHICLES THAT DRIVE IN FULLY AUTOMATED MODE
PROCÉDÉ POUR LA COORDINATION DU FONCTIONNEMENT D'UN VÉHICULE AUTOMOBILE ROULANT DE MANIÈRE COMPLÈTEMENT AUTOMATISÉE

(30) Priorität: 29.10.2012 DE 102012021282
(43) Veröffentlichungstag der Anmeldung: 02.09.2015
(73) Patentinhaber: Audi AG, 85045 Ingolstadt (DE)
(72) Erfinder: REICHEL, Michael, 85049 Ingolstadt (DE); SIEGEL, Andreas, 85049 Ingolstadt (DE)
(74) Vertreter: Herbst, Matthias Heinz
(86) Internationale Anmeldenummer: PCT/EP2013/003200
(87) Internationale Veröffentlichungsnummer: WO 2014/067638

(56) Entgegenhaltungen:
- WO-A2-02/082195
- US-A1- 2009 118 875
- O'DONNELL P A ET AL: "DEADLOCK-FREE AND COLLISION-FREE COORDINATION OF TWO ROBOT MANIPULATORS", PROCEEDINGS OF THE INTERNATIONAL CONFERENCE ON ROBOTICS AND AUTOMATION. SCOTTSDALE, MAY 15 - 19, 1989; [PROCEEDINGS OF THE INTERNATIONAL CONFERENCE ON ROBOTICS AND AUTOMATION], WASHINGTON, IEEE COMP. SOC. PRESS, US, Bd. VOL. 1, Nr. 1989, 15. Mai 1989 (1989-05-15), Seiten 484-489, XP000041486, DOI: 10.1109/ROBOT.1989.100033 ISBN: 978-0-8186-1938-0
- JAGER M ET AL: "Decentralized collision avoidance, deadlock detection, and deadlock resolution for multiple mobile robots", PROCEEDINGS OF THE 2001 IEEE/RSJ INTERNATIONAL CONFERENCE ON INTELLIGENT ROBOTS AND SYSTEMS. (IROS 2001). MAUI, HAWAII, OCT. 29 - NOV. 3, 2001; [IEEE/RSJ INTERNATIONAL CONFERENCE ON INTELLIGENT ROBOTS AND SYSTEMS], NEW YORK, NY : IEEE, US, Bd. 3, 29. Oktober 2001 (2001-10-29), Seiten 1213-1219, XP010573741, DOI: 10.1109/IROS.2001.977148 ISBN: 978-0-7803-6612-1

## Beschreibung

Die Erfindung betrifft ein Verfahren zur Koordination des Betriebs von vollautomatisiert fahrenden Kraftfahrzeugen.

In modernen Kraftfahrzeugen nimmt die Bedeutung von Fahrerassistenzsystemen, wie beispielsweise längsführenden Fahrerassistenzsysteme (insbesondere ACC-Systeme, "adaptive cruise control") oder querführenden Fahrerassistenzsysteme (insbesondere LKA-Systeme, "lane keep assist") zu. Durch Fortentwicklung dieser Systeme ist mittelfristig der zunehmende Einsatz autonom bzw. vollautomatisiert fahrender Kraftfahrzeuge zu erwarten. Es befinden sich Kraftfahrzeuge in der Entwicklung, die selbstständig in engen Räumen fahren können, jedoch nur unter Aufsicht und jeweils als einziges agierendes System. Eine erste Anwendung für das autonome bzw. vollautomatisierte Fahren mehrerer vollautomatischer Kraftfahrzeuge kann die Einführung von autonomen bzw. vollautomatisierten Parken auf dafür vorgesehenen Flächen sein.

Die Begriffe autonomes Fahren und vollautomatisiertes Fahren werden austauschbar für ein Fahren eines Kraftfahrzeugs genutzt, bei dem keine direkte Überwachung des Fahrens durch einen Fahrer erfolgt. Die Benennung als vollautomatisiertes Fahren erfolgt nach der durch die Bundesanstalt für Straßenwesen (BASt) eingeführten Benennung und Klassifizierung automatisierter Fahrfunktionen (Stand 06.09.2010).

Autonom bzw. vollautomatisiert fahrende Kraftfahrzeuge bieten zahlreiche Vorteile. So kann durch eine perfekte Anpassung des Fahrverhaltens eine Vermeidung von Stau und von Unfällen erreicht werden. Voraussichtlich werden autonom bzw. vollautomatisiert fahrende Fahrzeuge zunächst in abgeschlossenen Bereichen eingesetzt, wie beispielsweise beim selbstständigen Einparken in einem Parkhaus.

Beim autonomen bzw. vollautomatisierten Fahren wird in der Regel für jedes Kraftfahrzeug unabhängig eine Trajektorie aus den dem Fahrzeug vorliegenden Informationen ermittelt. Während dies bei relativ offenen Flächen und einer geringen Verkehrsdichte gut funktioniert, entstehen bei einer hohen Fahrzeugdichte leicht Situationen, die bei unabhängiger Ermittlung von Trajektorien nicht oder nur sehr langsam auflösbar sind. Um also die Vorteile des autonomen bzw. vollautomatisierten Fahrens, wie einen besseren Verkehrsfluss und eine höhere mögliche Fahrzeugdichte, zu nutzen, ist es notwendig, dass eine Berücksichtigung des Verhaltens anderer autonom bzw. vollautomatisiert fahrender Kraftfahrzeuge stattfindet.

WO 02/082195 A2 offenbart ein Verfahren zur automatischen, dezentralisierten Koordinierung der Bewegungsbahnen mobiler Roboter, zur Vermeidung von Kollisionen.

Eine solche Berücksichtigung ist besonders wichtig, wenn eine hohe Fahrzeugdichte auf engem Raum vorliegt, wie beispielsweise in einem Parkhaus, oder wenn unvorhergesehene Fahrsituationen auftreten, wie beispielsweise ein liegen gebliebenes Fahrzeug an einer engen Stelle. Bei bisherigen Verfahren erfolgt die Berücksichtigung durch Erkennung von Bewegung der anderen Kraftfahrzeuge, wozu geeignete Sensoren verwendet werden können. Dies kann in den oben beschriebenen Situationen jedoch dazu führen, dass es zu einem sogenannten Deadlock kommt, also einer Situation, in der keines der Kraftfahrzeuge die gewünschte Bewegung durchführen kann, oder dass Situationen nur sehr langsam aufgelöst werden können.

Aus der Druckschrift WO 02/082195 A2 ist ein Verfahren zur automatischen, dezentralisierten Koordinierung der Bewegungsbahnen mobiler Roboter zur Vermeidung von Kollisionen sowie zur Erfassung und Auflösung von gegenseitigen Blockierungen bekannt. Roboter empfangen Positionsinformationen von anderen Robotern. Bei Unterschreitung eines vorbestimmten Abstands wird eine Koordinationsverbindung hergestellt, bei der ein Roboter als Koordinator und der andere als Partner gewählt wird. Der Koordinator fordert die geplanten Bewegungsbahnsegmente seines Partners an und initiiert einen Algorithmus zur Kollisionsvermeidung, wobei ein zeitliches Abfolgeschema für die Bewegungsbahnsegmente von Koordinator und Partner ermittelt wird. In Abhängigkeit dieses zeitlichen Abfolgeschemas erteilt der Koordinator sich und seinem Partner die Erlaubnis zur Ausführung des jeweils nächsten Bewegungsbahnsegments. Wird einem Roboter die Erlaubnis zur Ausführung seines nächsten Bewegungsbahnsegments nicht erteilt, wird ein Algorithmus zur Blockierungserfassung initiiert. Bei Erfassung eines Kreises sich gegenseitig blockierender Roboter wird ein Algorithmus zur Blockierungslösung initiiert. Hierbei wird zunächst die Reihenfolge der Ausführungen der nächsten Bewegungsbahnsegmente der Roboter getauscht. Falls dies nicht zu einer Lösung der Blockierung führt, wird durch einen oder mehrere der sich in einem Kreis gegenseitig blockierenden Roboter ihre Bewegungsbahn neu geplant.

Aus dem Artikel O'Donnell et al., "Deadlock-free and collision-free coordination of two robot manipulators", Proceedings of the International Conference on Robotics and Automation, Washington, IEEE Comp. Soc. Press, US, Bd. Vol. 1 Nr. 1989, 15. Mai 1989, S. 484, ist ein Verfahren zur Kollisionsvermeidung von Roboterarmen bekannt. Durch eine zentrale Steuereinrichtung werden in Abhängigkeit eines Ablaufplans "Start" und "Warte" Befehle für die Roboterarme ausgegeben.

Der Artikel Jäger et al. "Decentralized Collision Avoidance, Deadlock Detection, and Deadlock Resolution for Multiple Mobile Robots", IEEE/RSJ International Conference on Intelligent Robots and Systems, New York, NY: IEEE, US, Bd. 3, 19. Oktober 2001, S. 1213, offenbart ein dezentralisiertes Verfahren zur Vermeidung von Kollisionen und Blockadesituationen und zur Auflösung von Blockadesituationen. Unterschreitet der Abstand zweier Roboter einen Grenzwert, so wird ein Koordinationsverfahren durchgeführt. Bei Erkennung einer Blockadesituation wird zunächst eine Ausführungsreihenfolge von Bewegungsschritten angepasst und bei einem weiteren Vorliegen der Blockadesituationen wird eine alternative Trajektorie durch wenigstens einen der Roboter geplant.

Der Erfindung liegt daher die Aufgabe zugrunde, ein demgegenüber verbessertes Verfahren zur Steuerung des Betriebs von autonom bzw. vollautomatisiert fahrenden Kraftfahrzeugen anzugeben.

Zur Lösung dieser Aufgabe ist ein Verfahren der eingangs genannten Art bestehend aus den folgenden Schritten vorgesehen:
- Ermittlung einer durch mindestens einen Fahreingriff beschriebenen Trajektorie für jedes Kraftfahrzeug aus Egoinformationen, die den Zustand des Kraftfahrzeugs einschließlich einer Zielposition beschreiben, und Umgebungsinformationen, die die Umgebung des Kraftfahrzeugs beschreiben, durch ein Fahrzeugsystem des Kraftfahrzeugs,
- Ermitteln, ob mindestens eine eine notwendige Koordination anzeigende Koordinationsbedingung vorliegt, durch das Fahrzeugsystem des Kraftfahrzeugs,
- Falls die Koordinationsbedingung oder mindestens eine der Koordinationsbedingungen vorliegt, Ausführen der folgenden Schritte:
   - Austausch von Trajektoriendaten, die die Trajektorie beschreiben, über eine Kommunikationsverbindung durch eine fahrzeugeigene Kommunikationseinrichtung jedes Kraftfahrzeugs,
   - Prüfung der Trajektoriendaten der Kraftfahrzeuge auf Konflikte, die aufgrund einer räumlichen und zeitlichen Überlappung der Trajektorien von mindestens zwei der Kraftfahrzeuge und/oder Nichterreichen der Zielposition mindestens eines der Kraftfahrzeuge vorliegen,
   - Falls ein Konflikt vorliegt:
      Anpassung der Trajektorie mindestens eines an dem Konflikt beteiligten Kraftfahrzeugs aufgrund wenigstens einer Arbitrierungsregel, die durch eine Arbitrierungseinrichtung ausgewertet wird, und Übertragen der jeweiligen angepassten Trajektorie über die jeweilige Kommunikationseinrichtung an das jeweilige Kraftfahrzeug, und
- Ausführen der von der jeweiligen Trajektorie beschriebenen Fahreingriffe durch jedes Kraftfahrzeug, wobei durch das Kraftfahrzeug, dessen Trajektorie angepasst wurde, die durch die jeweilige angepasste Trajektorie beschriebenen Fahreingriffe ausgeführt werden.

Das erfindungsgemäße Verfahren beruht auf zwei zentralen Ideen:
Zum einen werden in Situationen, in denen eine Koordination der Fahrbewegungen der Kraftfahrzeuge sinnvoll oder notwendig ist, das heißt eine Koordinationsbedingung vorliegt, die Trajektoriendaten zwischen den Kraftfahrzeugen und der Arbitrierungseinrichtung, wobei die Arbitrierungseinrichtung auch ein Fahrzeugsystem sein oder umfassen kann, ausgetauscht. Damit kann nicht nur ein momentan erkanntes Fahrmanöver beurteilt werden, sondern es können auch die Fahrmanöver, die zukünftig vorgesehen sind, in Trajektorienberechnungen mit einbezogen werden. Zum anderen findet im erfindungsgemäßen Verfahren die Anpassung der mindestens einen Trajektorie aufgrund einer Arbitrierungsregel statt, die auf einer Arbitrierungseinrichtung ausgewertet wird. Dies ist entscheidend, da es möglich ist, dass verschiedene Kraftfahrzeuge unterschiedliche Regelsätze zur Ermittlung von Trajektorien nutzen. Damit können selbst in dem Fall, in dem alle an einem Konflikt beteiligten Fahrzeuge diesen Konflikt erkennen und vermeiden wollen, die unterschiedlichen Vermeidungsstrategien zu neuen Konflikten führen. Werden alle notwendigen Trajektorienanpassungen durch eine Arbitirierungseinrichtung aufgrund eines Regelsatzes durchgeführt, so wird dieses Problem vermieden.

Üblicherweise werden die einzelnen Kraftfahrzeuge in den meisten Fahrsituationen die bekannten Funktionen zum Ermitteln von Trajektorien beim autonomen bzw. vollautomatisierten Fahren nutzen. Die Trajektorjen der Kraftfahrzeuge werden also für jedes Kraftfahrzeug einzeln unter Berücksichtigung der dem Fahrzeugsystem vorliegenden Ego- und Umgebungsinformationen ermittelt. Das erfindungsgemäße Verfahren zur Koordination des Betriebs von autonom bzw. vollautomatisiert fahrenden Kraftfahrzeugen unterscheidet sich also nur in besonderen Fahrsituationen, in denen wie oben beschrieben eine Koordination der Fahrbewegungen der Kraftfahrzeuge sinnvoll oder notwendig ist, von konventionellen Verfahren zum autonomen bzw. vollautomatisierten Fahren von Kraftfahrzeugen.

Eine solche Fahrsituation ist ein sogenannter "Deadlock", das heißt eine Fahrsituation, die bei unabhängiger Bestimmung der Trajektorien der einzelnen Kraftfahrzeuge nicht auflösbar ist, da sich die Fahrzeuge gegenseitig blockieren. Gleiches gilt für Situationen, in denen festgestellt werden kann, dass eine Situation nur sehr langsam aufgelöst werden kann, wenn keine Koordination der Fahrbewegungen der Kraftfahrzeuge erfolgt. Es ist jedoch auch möglich, dass ein Fahrzeugsystem eine Trajektorie ermittelt, die für das Kraftfahrzeug vorteilhaft wäre, die jedoch eine Koordination mit anderen Kraftfahrzeugen notwendig macht. In diesem Fall kann das Fahrzeugsystem des Kraftfahrzeugs die Ausführung eines erfindungsgemäßen Verfahrens initiieren. In Fällen, in denen eine Vielzahl von Kraftfahrzeugen auf engem Raum agiert, ist es möglich, dass die Nutzung des erfindungsgemäßen Verfahrens in gewissen Bereichen grundsätzlich erfolgt.

In diesem Verfahren wird zunächst eine Trajektorie ermittelt, was wie üblich erfolgen kann, wobei es aber auch möglich ist, Solltrajektorien zu ermitteln, deren Ausführung ohne eine Kooperation zwischen Kraftfahrzeugen nicht möglich ist. Die Trajektorie wird in dem Fahrzeugsystem des Kraftfahrzeugs ermittelt. Zur Ermittlung der Trajektorie werden vor allem Sensorinformationen, aber auch Umweltinformationen aus anderen Quellen und Egoinformationen genutzt. Die Trajektorie beschreibt einen geplanten Weg zu einem vorgegebenen Ziel. Der geplante Weg muss, insbesondere wenn die Trajektorie eine Solltrajektorie ist, nicht notwendigerweise frei von anderen Kraftfahrzeugen, bzw. deren vorausgesagten Trajektorien sein. In diesem Fall treten Konflikte auf, die im weiteren Verlauf des erfindungsgemäßen Verfahrens aufgelöst werden.

Zur Ermittlung der Trajektorien können verschiedene Strategien genutzt werden. Es kann beispielsweise ein besonders vorsichtiges oder energiesparendes Fahren vorgesehen sein, aber auch eine Fahrweise, die auf ein möglichst schnelles Erreichen des Ziels abzielt. Dementsprechend werden auch die anderen Fahrzeuge unterschiedlich berücksichtigt. Die Strategien können auf unterschiedliche Art vorgegeben sein. So kann eine Strategie zufällig ausgewählt werden, oder durch ein Bedienelement vorgegeben werden.

Nach dem Ermitteln wird geprüft, ob eine Koordination zwischen Kraftfahrzeugen sinnvoll oder notwendig zum schnellen Erreichen des Ziels der Kraftfahrzeuge ist, also eine Koordinationsbedingung vorliegt. Eine Koordination zwischen Kraftfahrzeugen ist vor allem in Situationen vorteilhaft, in denen viele autonom bzw. vollautomatisiert fahrende Kraftfahrzeuge auf engem Raum agieren. Zur Ermittlung von Koordinationsbedingungen sind vielfältige Verfahren möglich, auf die im weiteren noch genauer eingegangen wird. Es soll jedoch bereits erwähnt werden, das eine Koordination insbesondere dann vorteilhaft ist, wenn eine Trajektorie ermittelt wurde, die nicht ohne Veränderung einer Position oder einer durch das Fahrzeugsystem vorausgesagten Bewegung mindestens eines der anderen Kraftfahrzeuge möglich ist. Das Verfahren kann insbesondere durch ein einzelnes Kraftfahrzeug, eine Mehrzahl von Kraftfahrzeugen und/oder eine Zentraleinheit eingeleitet werden.

Liegt keine Koordinationsbedingung vor, so werden die Fahreingriffe der Trajektorien der einzelnen Kraftfahrzeuge von den Kraftfahrzeugen ausgeführt. Selbstverständlich wird wie in üblichen Verfahren die Trajektorie kontinuierlich, insbesondere unter Berücksichtigung von Sicherheitsaspekten, überprüft und bei Bedarf angepasst, insbesondere neu berechnet.

Wurde das Vorliegen einer Koordinationsbedingung ermittelt, so wird die ermittelte Trajektorie an mindestens ein Kraftfahrzeug, das am Verfahren teilnimmt, oder die Arbitrierungseinrichtung übermittelt. Die Bestimmung der Kraftfahrzeuge, die am Verfahren teilnehmen, ist auf eine Vielzahl von Weisen möglich. Im einfachsten Fall werden diese Kraftfahrzeuge durch das Fahrzeugsystem eines Kraftfahrzeugs, dass das Koordinationsverfahren einleitet, bestimmt. Es ist aber auch möglich, dass beispielsweise alle Kraftfahrzeuge, die sich innerhalb eines gewissen Bereiches befinden, an diesem Verfahren teilnehmen. Insbesondere kann dies ein Bereich sein, der zum autonomen bzw. vollautomatisierten Fahren ausgewiesen ist. So können Parkplätze oder Parkhäuser, aber auch bestimmte Straßen oder Teile von Straßen zum Betrieb von autonomen bzw. vollautomatisierten Kraftfahrzeugen freigegeben sein. In diesem Fall kann es sinnvoll sein, alle Kraftfahrzeuge in diesem Bereich in das Verfahren einzubeziehen.

Die Übermittlung der Trajektoriendaten kann über eine Fahrzeug-zu-Fahrzeug-Kommunikation (car2car-Kommunikation) oder über eine Fahrzeug-zu-Infrastruktur-Kommunikation (car2x-Kommunikation) erfolgen. Um die Interpretation der Trajektoriendaten eines anderen Fahrzeugs zu ermöglichen, sollten diese in einem definierten Format vorliegen. Im einfachsten Fall kann dies eine Liste von Fahreingriffen mit zugeordneten Zeitintervallen sein. Es ist aber auch möglich, diese Trajektorie, als eine Liste von Ortsinformationen zu übermitteln. Fahreingriffe, Orte und Zeiten können auch mit einem Toleranzintervall übertragen werden. Damit ergibt sich für das Kraftfahrzeug ein "Bahnvolumen", das von diesem Fahrzeug belegt wird.

Nach Übertragung der Trajektoriendaten kann in jedem der Kraftfahrzeuge oder seitens der Arbitrierungseinrichtung geprüft werden, ob ein Konflikt zwischen den Trajektorien vorliegt. Ein Konflikt liegt vor allem dann vor, wenn zwei Kraftfahrzeuge zu irgendeinem Zeitpunkt der Trajektorie einen Abstand haben, der kleiner ist als die Fahrzeuggrößen und gegebenenfalls ein Sicherheitsabstand ist. Der Sicherheitsabstand kann hier auch an die Fahrund/oder Umgebungsbedingungen angepasst werden. Liegt ein solcher Konflikt vor, so bestünde bei Bewegung der Kraftfahrzeuge auf diesen Trajektorien die Gefahr einer Kollision. Ein Konflikt kann aber auch dann festgestellt werden, wenn mindestens die Trajektorie mindestens eines Kraftfahrzeugs die Zielposition nicht erreicht. In beiden Fällen ist es notwendig, die Trajektorie mindestens eines Kraftfahrzeugs anzupassen.

In diesem Fall wird im erfindungsgemäßen Verfahren die Trajektorie des mindestens einen Kraftfahrzeugs durch die Auswertung wenigstens einer Arbitrierungsregel durch eine Arbitrierungseinrichtung, angepasst. Zur Anpassung der Trajektorie des mindestens einen Kraftfahrzeugs werden die Trajektoriendaten der Kraftfahrzeuge sowie Umweltinformationen und soweit vorliegend Egoinformationen der Kraftfahrzeuge als Eingangsdaten für die Arbitrierungsregel verwendet. Die Arbitrierungsregel umfasst insbesondere eine Prioritätsbestimmung für die Kraftfahrzeuge und Regeln zur Trajektorienbestimmung. Durch Anwendung der Arbitrierungsregeln auf die Eingangsdaten werden Ausgangsdaten erzeugt, die mindestens eine Anpassung der Trajektorie wenigstens eines Kraftfahrzeugs umfassen.

Für die Auswahl der Arbitrierungseinrichtung bzw. der Arbitrierungsregel sind eine Vielzahl von Ansätzen denkbar, auf die im Weiteren genauer eingegangen wird. Entscheidend ist die Nutzung eines Regelsatzes zur Auflösung des Konflikts. Es sind eine Vielzahl von Regelsätzen denkbar. Beispielsweise kann eine Optimierung erfolgen, die einzelne Kraftfahrzeuge schnellstmöglich zum Ziel bringt, es kann aber auch eine Lösung gefunden werden, die den geringsten Zeitaufwand für alle Kraftfahrzeuge erreicht. Arbitrierungsregeln können auch Konfliktlösungsregeln, wie beispielsweise eine Rechts-vor-links-Regel an Kreuzungen umfassen. Zur Lösung dieser Sorte von Wegfindungsproblem mit einer Vielzahl von Teilnehmern existieren eine Vielzahl von Lösungsansätzen und es findet eine stetige Verbesserung der benutzten Algorithmen statt. Daher sollen die Arbitrierungsregeln selbst hier nicht im Detail erläutert werden und die gegebenen Beispiele dienen nur zur Erläuterung des Prinzips.

Die Arbitrierungsregeln können in der Arbitrierungseinrichtung selbst gespeichert sein. Es ist aber auch möglich, dass die Arbitrierungsregeln auf einem anderen System gespeichert sind und von der Arbitrierungseinrichtung beispielsweise über eine Fahrzeug-zu-Infrastruktur Kommunikationseinrichtung geladen werden. Das Laden kann bereits beim Start der Arbitrierungseinrichtung oder erst bei Auftreten eines Konflikts stattfinden. Ist die Arbitrierungseinrichtung ein Fahrzeugsystem, so ist es auch möglich, dass beim Einfahren in einen Bereich, der zum autonomen bzw. vollautomatisierten Fahren vorgesehen ist, ein Regelsatz geladen wird, der für diesen Bereich gilt.

Findet die Arbitrierungseinrichtung aufgrund wenigstens einer Arbitrierungsregel Anpassungen für mindestens eine Trajektorie, die den Konflikt auflösen, wird die wenigstens eine angepasste Trajektorie über Kommunikationseinrichtungen an die zugeordneten Kraftfahrzeuge übertragen. Die zugeordneten Kraftfahrzeuge führen dann die Fahreingriffe der angepassten Trajektorien aus. Die Ausführung der Trajektorien kann entweder weiter überwacht werden, sodass Abweichungen von den Trajektorien, die zu einer Lösung des Konflikts führen, korrigiert werden können, oder das Verfahren wird nach Übertragung der angepassten Trajektorien beendet. Falls es im zweiten Fall zu Abweichungen von den vorgegebenen Trajektorien kommt, kann bei Bedarf durch eines der Kraftfahrzeuge erneut ein Austausch von Trajektoriedaten und eine Arbitrierung initiiert werden.

Eine Koordination zwischen Kraftfahrzeugen kann in vielen Fällen sinnvoll sein. So kann die Koordinationsbedingung oder eine der Koordinationsbedingungen eine Ermittlung einer eine Blockade anzeigenden Blockadebedingung durch das Fahrzeugsystem sein, wobei bei Vorliegen einer Blockadebedingung das Fahrzeugsystem insbesondere zum Ermitteln einer Trajektorie, die nach den Umgebungsinformationen nicht ohne Veränderung einer Position oder einer durch das Fahrzeugsystem vorausgesagten Bewegung mindestens eines der anderen Kraftfahrzeuge ausführbar ist, ausgebildet ist. Eine Blockadebedingung ist allgemein in Fällen gegeben, in denen das Fahrzeugsystem ermitteln kann, dass ein anderes Kraftfahrzeug eine gewollte Trajektorie des eigenen Kraftfahrzeugs wenigstens teilweise blockiert. Insbesondere ist eine Blockadebedingung dann gegeben, wenn ein autonomes bzw. vollautomatisiertes Fahren ohne Arbitrierung nicht oder nur sehr langsam zum Erreichen der vorgegebenen Zielposition führt. Es ist in diesem Fall vorteilhaft, den anderen Kraftfahrzeugen bereits eine Solltrajektorie für das eigene Kraftfahrzeug zu übermitteln. Diese ist zunächst nicht ausführbar, da sie einzelne Positionen oder vorausgesagte Bewegungen anderer Kraftfahrzeuge nicht berücksichtigt, kann aber ein gewünschtes Ergebnis der Arbitrierung vorgeben.

Dies soll am Beispiel einer Einmündung, auf die sich zwei Kraftfahrzeuge zubewegen, erläutert werden. Werden bei der Ermittlung der Trajektorien der Kraftfahrzeuge alle vorliegenden Umgebungsinformationen einschließlich der vorausgesagten Trajektorie des jeweils anderen Kraftfahrzeugs berücksichtigt, so müssten, soweit keine Vorfahrtsregelung vorliegt, beide Kraftfahrzeuge abbremsen, um eine Kollision zu vermeiden. In diesem Fall würden beide Fahrzeuge warten, bis das andere Fahrzeug die Einmündung passiert hat, was zu einem dauerhaften Stillstand beider Fahrzeuge führt. Ermittelt nun nach Stillstand der Fahrzeuge mindestens ein Fahrzeugsystem eines der beiden Kraftfahrzeuge, dass eine Blockade anzeigende Blockadebedingung vorliegt, so ist dies eine Koordinationsbedingung und es erfolgt ein Austausch der Trajektorien der Kraftfahrzeuge, eine Überprüfung der Trajektorien auf Konflikte, wobei hier ein Konflikt vorliegt, da keines der Kraftfahrzeuge seine Zielposition erreicht, und eine Arbitrierung.

Zur Feststellung einer Blockade können durch das Fahrzeugsystem eines der Kraftfahrzeuge eine Vielzahl von Blockadebedingungen genutzt werden. Im einfachsten Fall ist die Blockadebedingung oder eine der Blockadebedingungen eine wiederholte Ermittlung einer Trajektorie, die die Zielposition nicht erreicht, über einen vorgegebenen oder vorgebbaren Zeitraum. Mit dieser Bedingung werden klassische "Deadlocks" zuverlässig erkannt, da hier keine Trajektorie berechnet werden kann, die zum Ziel führt. Diese Bedingung erkennt jedoch keine Verkehrssituationen, die sich periodisch wiederholen oder Blockadesituationen die nur sehr langsam aufgelöst werden können. Daher ist auch keine Auflösung solcher Verkehrssituation durch Arbitrierung möglich.

Es ist jedoch auch möglich, dass die Blockadebedingung oder eine der Blockadebedingungen ist, dass innerhalb eines vorgegebenen oder vorgebbaren Zeitintervalls ein Abstands zwischen Kraftfahrzeug und Zielposition niemals kleiner ist als ein kleinster Abstand zwischen Kraftfahrzeug und Zielposition vor Beginn dieses Zeitintervalls. Mit einer solchen Blockadebedingung werden insbesondere zyklische Verkehrssituationen, die sich periodisch wiederholen, erkannt.

Alternativ oder zusätzlich ist es auch möglich, dass die Blockadebedingung oder eine der Blockadebedingungen eine zeitliche oder räumliche Abweichung von einer Idealtrajektorie ist, die größer ist als eine vorgegebene oder vorgebbare zeitliche oder räumliche Abweichung, wobei die Idealtrajektorie unter Vernachlässigung mindestens eines Kraftfahrzeugs berechnet wird. Mit dieser Blockadebedingung können beispielsweise großräumige Umfahrungen oder lange Wartezeiten vermieden werden, die ansonsten nicht als Blockade wahrgenommen werden.

Es ist vorteilhaft, wenn das Fahrzeugsystem auch zur Ermittlung von Trajektorien, die nach den Umgebungsinformationen nicht ohne Veränderung einer Position oder einer durch das Fahrzeugsystem vorausgesagten Bewegung mindestens eines der anderen Kraftfahrzeuge ausführbar ist, ausgebildet ist. Wird beispielsweise im Fahrzeugsystem berechnet, dass eine Trajektorie, die eine Position oder eine durch das Fahrzeugsystem vorausgesagte Bewegung eines der anderen Kraftfahrzeuge nicht berücksichtigt, zu einem wesentlich schnelleren Erreichen des Ziels führt, so kann eine solche Trajektorie genutzt werden. Da eine direkte Ausführung einer solchen Trajektorie unter Berücksichtigung von Sicherheitsaspekten nicht möglich ist, sollte nach Ermitteln einer solchen Trajektoje diese Trajektorie mit den anderen Fahrzeugen ausgetauscht werden. Damit ist also eine Koordinationsbedingung gegeben. Damit können die Fahrzeugsysteme feststellen, dass ein Konflikt vorliegt und eine Arbitrierung kann erfolgen. In vielen Fällen kann als Ergebnis der Arbitrierung eine insgesamt bessere Trajektorie für die Kraftfahrzeuge erreicht werden. Es ist anzumerken, dass im erfindungsgemäßen Verfahren Trajektorien bei Vorliegen einer Koordinationsbedingung nur nach einer Überprüfung der Trajektorien auf vorliegende Konflikte und wenn notwendig Anpassung mindestens einer Trajektorie durch Arbitrierung und damit Beseitigung des Konflikts ausgeführt werden.

Insbesondere in Verkehrssituationen, in denen eine Vielzahl autonom bzw. vollautomatisiert fahrender Kraftfahrzeuge auf beengtem Raum agiert, kann ein koordiniertes Fahren häufig zu einem wesentlich schnelleren Erreichen der Zielpositionen der Kraftfahrzeuge führen. Es ist daher möglich, dass die Koordinationsbedingung oder eine der Koordinationsbedingungen ein Aufenthalt des Kraftfahrzeugs einem Bereich, der zum koordinierten Fahren ausgebildet ist, ist, wobei das Fahrzeugsystem zur Bestimmung des Aufenthalts in einem solchen Bereich insbesondere zur Nutzung von Daten einer Positionsbestimmungseinrichtung und/oder der Kommunikationseinrichtung ausgebildet ist.

In diesem Fall können potentielle Konflikte, auch solche, die eine Vielzahl von Kraftfahrzeugen umfassen, frühzeitig erkannt und aufgelöst werden. Insbesondere ist es auch möglich, dass in einem Bereich, der zum koordinierten Fahren ausgebildet, ist eine Zentraleinrichtung vorhanden ist, die die Trajektorien der Kraftfahrzeuge auf Konflikte überprüft und die Trajektorien der Kraftfahrzeuge bei Bedarf anpasst.

Als Arbitrierungseinrichtung können im erfindungsgemäßen Verfahren eine Vielzahl unterschiedlicher Systeme genutzt werden. Es ist vorteilhaft, wenn die Arbitrierungseinrichtung das Fahrzeugsystem eines Kraftfahrzeugs ist, insbesondere eines Kraftfahrzeugs, das an einem Konflikt beteiligt ist, und die Trajektoriendaten der mindestens einen angepassten Trajektorie über die fahrzeugeigene Kommunikationseinrichtung an das der Trajektorie zugeordnete Kraftfahrzeug übermittelt werden. In diesem Fall ist keine zusätzliche Infrastruktur notwendig, um das erfindungsgemäße Verfahren durchzuführen. Moderne Kraftfahrzeuge haben in der Regel Fahrzeugsysteme mit ausreichend Rechenleistung zur Lösung komplexer Probleme. Damit ist eine Berechnung der Anpassung der mindestens einen Trajektorie direkt auf dem Fahrzeugsystem eines der am Konflikt beteiligten Kraftfahrzeuge möglich. Sind die Kraftfahrzeuge zudem mit Einrichtungen zur Fahrzeug-zu-Fahrzeug-Kommunikation ausgerüstet, so ist das erfindungsgemäße Verfahren jederzeit und an jedem Ort möglich, wenn ein Konflikt zwischen den Trajektorien von zwei oder mehreren Kraftfahrzeugen auftritt.

Soll wie zuvor beschrieben ein Fahrzeugsystem eines, insbesondere am Konflikt beteiligten, Kraftfahrzeugs zur Ermittlung der Anpassung der mindestens eine Trajektorie genutzt werden, so ist es notwendig, dieses Fahrzeugsystem eindeutig zu bestimmen. Im einfachsten Fall kann das Fahrzeug, dessen Fahrzeugsystem die Arbitrierungseinrichtung ist, zufällig bestimmt werden. So können beispielsweise die Fahrzeugsysteme aller am Konflikt beteiligten Fahrzeuge Zufallszahlen erzeugen, und das Fahrzeugsystem, das die größte bzw. die kleinste Zahl ermittelt hat, wird zur Arbitrierungseinrichtung bestimmt. Auch andere zufällige Bestimmungen sind denkbar.

Es ist jedoch auch möglich, dass durch die Kommunikationseinrichtung mindestens eines der Kraftfahrzeuge eine Bestimmungsinformation zur Bestimmung des Kraftfahrzeugs, dessen Fahrzeugsystem die Arbitrierungseinrichtung ist, übertragen wird, insbesondere eine Prioritätsinformation. Damit ist es möglich, dass Fahrzeugsysteme bestimmter Kraftfahrzeuge, insbesondere von Hilfsfahrzeugen, wie Abschleppwagen oder Rettungsfahrzeuge, grundsätzlich zur Arbitrierungseinrichtung bestimmt werden. Damit wird in diesem Fall eine besondere Arbitrierungsregel genutzt, die sicherstellt, dass dieses Hilfsfahrzeug besonders rasch zu seinem Einsatzort gelangt. Es ist jedoch auch möglich, dass Fahrzeuge beispielsweise die Leistungsfähigkeit ihrer Fahrzeugsysteme übertragen. In diesem Fall kann das leistungsfähigste Fahrzeugsystem zur Arbitrierungseinrichtung bestimmt werden, womit es möglich sein kann, komplexere Anpassungen an Routen vorzunehmen, um ein optimales Ergebnis zu erreichen, oder Trajektorienanpassungen schneller zu berechnen. Auch das Fahrzeugsystem mit den besten Umgebungsinformationen kann durch Übertragung einer Bestimmungsinformation zur Arbitrierungseinrichtung bestimmt werden.

Alternativ ist es möglich, dass die Arbitrierungseinrichtung eine Zentraleinrichtung ist, wobei die Zentraleinrichtung eine Kommunikationseinrichtung umfasst oder mit dieser über ein Kommunikationsnetzwerk verbunden ist, die mit den Kommunikationseinrichtungen der mindestens zwei Kraftfahrzeuge kommuniziert, und die Trajektoriendaten der mindestens einen angepassten Trajektorie über diese Kommunikationseinrichtung an das der Trajektorie zugeordnete Kraftfahrzeug übermittelt werden. Solche Zentraleinrichtungen können insbesondere in Bereichen, die zum autonomen bzw. vollautomatisierten Fahren ausgebildet sind, vorgesehen sein. Eine Zentraleinrichtung als Arbitrierungseinrichtung ist grundsätzlich neutral, d. h. es findet keine Bevorzugung eines Kraftfahrzeugs aufgrund der Auswahl der Arbitrierungseinrichtung statt. Zudem wird von einer Zentraleinrichtung stets ein Regelsatz genutzt, d. h. es kann zu keinen neuen Konflikten durch widersprüchliche Arbitrierungen innerhalb eines kurzen Zeitintervalls kommen. Die Nutzung einer Zentraleinrichtung hat zudem den Vorteil, dass eine Zentraleinrichtung unabhängig Informationen ermitteln kann, und potenziell das beste Modell der Gesamtverkehrssituation besitzt. Vor allem in kontrollierten Umgebungen, wie beispielsweise in einem Parkhaus, können damit zuverlässig Konfliktsituationen aufgelöst werden. Alternativ ist es jedoch auch möglich, dass eine Zentraleinrichtung für große Gebiete zuständig ist und die Kraftfahrzeuge, falls Konflikte zwischen Trajektorien auftreten, diese beispielsweise per Mobilfunk kontaktieren. Die Nutzung einer Zentraleinrichtung als Arbitrierungseinrichtung hat zudem den Vorteil, dass bei komplexen Situationen auch direkt auf menschliche Mitarbeiter zurückgegriffen werden kann, um diese Situationen zu beheben. Entsteht beispielsweise durch ein liegengebliebenes Fahrzeug in einem Parkhaus eine Verkehrssituation, bei der keine Anpassung mindestens einer Trajektorie möglich ist, sodass die Kraftfahrzeuge ihr Ziel erreichen, so kann eine Zentraleinrichtung einen menschlichen Mitarbeiter benachrichtigen, der das liegengebliebene Fahrzeug beseitigt. Alternativ kann eine solche Zentraleinrichtung auch auf automatische System, wie beispielsweise automatische Abschleppsysteme, zurückgreifen.

Eine Arbitrierungseinrichtung kann jedoch auch als dezentrales Netzwerk ausgebildet sein, das insbesondere die Fahrzeugsysteme jener Kraftfahrzeuge, die an einem Konflikt beteiligt sind, oder die Fahrzeugsysteme aller Kraftfahrzeuge umfasst. So ist beispielsweise eine Abstimmung der Arbitrierungsregeln zwischen den Kraftfahrzeugen möglich. Einzelne Regeln können per Mehrheitsentscheid oder per Zufall bestimmt werden. Es ist auch möglich, dass Fahrzeugsysteme einzelner Kraftfahrzeuge Trajektorienanpassungen vorschlagen, wobei die Fahrzeugsysteme anderer Kraftfahrzeuge diesen Vorschlägen zustimmen oder sie ablehnen können. Auch eine verteilte Berechnung der Konfliktlösung ist möglich. Dadurch steht mehr Rechenleistung zur Verfügung und komplexe Konflikte können schneller gelöst werden.

Insbesondere ist es möglich, dass das Fahrzeugsystem mindestens eines der Kraftfahrzeuge für mindestens ein anderes Kraftfahrzeug Wunschtrajektorien ermittelt und diese über das dezentrale Netzwerk ausgetauscht werden. Dies ist vor allem in Verkehrssituationen, in denen Lösungsmöglichkeiten mit beidseitigem Vorteil bestehen, möglich. Beispiele hierfür sind das gemeinsame Zurücksetzen, wenn aufgrund eines liegengebliebenen Fahrzeugs eine Vorwärtsfahrt nicht möglich ist oder eine Situation, in der ein Kraftfahrzeug mehr Raum zum Ausparken benötigt, das andere allerdings in die frei werdende Parklücke einfahren möchte.

Da beim erfindungsgemäßen Verfahren eine Arbitrierungseinrichtung alle notwendigen Anpassungen von Trajektorien vornehmen soll, es aber möglich ist, dass einzelne Kraftfahrzeuge über Umgebungsinformationen oder sonstige Informationen verfügen, die der Arbitrierungseinrichtung nicht zur Verfügung stehen, ist es vorteilhaft, wenn durch die Kommunikationseinrichtung mindestens eines der Kraftfahrzeuge mindestens eine Fahrzeuginformation übertragen wird, insbesondere eine Position des Fahrzeugs, die Zielposition, die das Kraftfahrzeug, insbesondere innerhalb eines Zeitfensters, erreichen soll, Fahrmöglichkeitsinformationen, die mögliche Fahrmanöver beschreiben, und/oder eine Prioritätsinformation, die als eine Eingangsgröße der Arbitrierungsregel zur Anpassung der mindestens einen Trajektorie genutzt wird.

Zur Auflösung eines Konflikts sind möglichst detaillierte Informationen über die einzelnen am Konflikt beteiligten Fahrzeuge nützlich. So können Informationen über mögliche Wendekreise einzelner Fahrzeuge oder eine maximal erreichbare Beschleunigung übermittelt werden. Auch Prioritätsinformationen können zur Anpassung von Trajektorien genutzt werden. So können beispielsweise Trajektorien dermaßen angepasst werden, dass Hilfsfahrzeuge wie Abschleppwagen oder Rettungsfahrzeuge zügig zu ihrem Einsatzort kommen. Auch "quality of service"-Informationen sind denkbar. Damit ist es beispielsweise in Parkhäusern möglich, bei Zahlung einer Zusatzgebühr ein schnelleres Ein- oder Ausparken zu ermöglichen. Die übertragenen Fahrzeuginformationen können auch Informationen umfassen, ob einzelne Kraftfahrzeuge besonders schnell oder besonders energieeffizient ihren Zielort erreichen sollen.

Nur mit einem möglichst vollständigen Umgebungsmodell ist eine möglichst gute Anpassung der mindestens eine Trajektorie möglich. Daher ist es möglich, dass durch die Kommunikationseinrichtung mindestens eines der Kraftfahrzeuge mindestens eine Umgebungsinformation übertragen wird, insbesondere mindestens eine ermittelte Position eines Fahrzeugs oder Hindernisses. Dies kann insbesondere direkt durch Sensorinformationen erfolgen.

In Einzelfällen ist es möglich, dass keine Anpassung der mindestens einen Trajektorie aufgrund der wenigstens einen Arbitrierungsregel möglich ist, die zum Erreichen der Zielposition der Kraftfahrzeuge führt. In diesem Fall kann eine Bestimmung einer anderen Arbitrierungseinrichtung erfolgen, wobei die andere Arbitrierungseinrichtung insbesondere ein Fahrzeugsystem eines bisher nicht am Arbitrierungsprozess beteiligten Kraftfahrzeugs oder eine Zentraleinrichtung ist. Damit sind mehrstufige Verfahren möglich. Beispielsweise kann zunächst versucht werden in einem dezentralen Netzwerk aus den Fahrzeugsystemen der am Konflikt beteiligten Kraftfahrzeuge gemeinsam gleichberechtigt zu einem Ergebnis zu gelangen. Da dieser Prozess relativ komplex ist, kann es sein, dass in einem vorgegebenen Zeitintervall keine Lösung gefunden wird. In diesem Fall kann dann die Fahrzeugeinrichtung eines der beteiligten Kraftfahrzeuge zur Arbitrierungseinrichtung bestimmt werden. Wird auch hier keine Lösung gefunden, kann die Arbitrierung an eine Zentraleinrichtung oder ein unbeteiligtes Fahrzeug abgegeben werden.

In dem Fall, dass keine Anpassung der mindestens eine Trajektorie aufgrund der wenigstens einen Arbitrierungsregel zum Erreichen der Zielposition der Fahrzeuge möglich ist, kann auch eine Alarmeinrichtung aktiviert werden, die eine Person durch ein Tonsignal, ein visuelles Signal oder ein Kommunikationsnetzwerk benachrichtigt. Eine solche Situation kann beispielsweise entstehen, wenn unabhängig von den Trajektorien eine Auflösung eines Konflikts tatsächlich unmöglich ist, beispielsweise durch das Liegenbleiben eines Fahrzeugs an einer Engstelle. Es können jedoch auch komplexe Situationen entstehen, in denen ein vorgegebener Algorithmus nicht innerhalb eines vorgegebenen Zeitintervalls zu einer Lösung kommt. Auch in einem solchen Fall kann menschliches Eingreifen hilfreich sein, da hier eine flexiblere Anpassung an die Situation möglich ist.

Führt keine Anpassung der mindestens einen Trajektorie aufgrund der wenigstens einen Arbitrierungsregel zum Erreichen der Zielposition der Fahrzeuge, ist auch eine Stilllegung der Kraftfahrzeuge möglich. Ein weiterer Betrieb der Kraftfahrzeuge würde in diesem Fall nur zu potenzieller Gefährdung der Sicherheit und weiterem Energieverbrauch führen. Daher sollte ein Stilllegen der Fahrzeuge erfolgen, nach Möglichkeit in einer Position, in der andere Kraftfahrzeuge möglichst wenig behindert werden.

Wie eingangs beschrieben ist das erfindungsgemäße Verfahren, nachdem eine Anpassung der mindestens einen Trajektorie ermittelt ist und diese an das zugeordnete Kraftfahrzeug übertragen ist, eigentlich abgeschlossen. Folgen die Fahrzeuge den Trajektorien perfekt, so ist zunächst keine weitere Anpassung der Trajektorien notwendig. Sollte dennoch ein neuer Konflikt (bzw. eine neue Blockade) auftreten, so wird dieser erkannt und ein neuer Austausch der Trajektorien und eine Behebung des Konflikts durch Anpassung der Trajektorie mindestens eines Kraftfahrzeugs erfolgt. Gerade in komplexen Fahrsituationen können aber leichte Abweichungen von der Trajektorie innerhalb kurzer Zeitintervalle zu neuen Konfliktsituationen führen. Wird in diesen Situationen das erfindungsgemäße Verfahren jedes Mal erneut durchgeführt, und wechselt dabei potenziell die Arbitrierungseinrichtung, so kann sich damit auch der verwendete Regelsatz ändern. In Einzelfällen können hier die verschiedenen Arbitrierungseinrichtungen also gegeneinander arbeiten. Daher ist es vorteilhaft, wenn nach Anpassung der mindestens einen Trajektorie durch die Arbitrierungseinrichtung die Ausführung der Fahreingriffe der Trajektorien, insbesondere durch Empfang von übermittelten Positionsdaten und/oder durch Sensordaten, überwacht wird und bei Abweichung mindestens eines der Kraftfahrzeuge von der zugeordneten Trajektorie mindestens eine Trajektorie angepasst und über die der Arbitrierungseinrichtung zugeordnete Kommunikationseinrichtung an das der Trajektorie zugeordnete Kraftfahrzeug übermittelt wird.

In diesem Fall wird ein Wechsel der Arbitrierungseinrichtung vermieden. Abweichungen von den Trajektorien können korrigiert werden und der ursprüngliche voraussichtlich erfolgreiche Plan zur Auflösung des Konflikts fortgesetzt werden. Hier ist es insbesondere vorteilhaft, wenn der Arbitrierungseinrichtung entweder laufend Sensorinformationen bzw. abstrakte Umgebungsinformationen übertragen werden oder wenn beteiligte Kraftfahrzeuge neue, potenziell relevante Umgebungsdaten erkennen und diese der Arbitrierungseinrichtung übermitteln.

Neben dem Verfahren betrifft die Erfindung auch ein Kraftfahrzeug, umfassend mindestens einen Sensor sowie eine Kommunikationseinrichtung zur Fahrzeug-zur-Fahrzeug und/oder Fahrzeug-zur-Infrastruktur-Kommunikation, sowie ein Fahrzeugsystems, welches zur Teilnahme am beschriebenen Verfahren ausgebildet ist. Sämtliche Ausführungen bezüglich des erfindungsgemäßen Verfahrens lassen sich analog auf das erfindungsgemäße Kraftfahrzeug übertragen.

Weitere Vorteile und Einzelheiten der Erfindung ergeben sich aus den im Folgenden beschriebenen Ausführungsbeispielen sowie anhand der Zeichnungen. Dabei zeigen:
- Fig. 1: ein Flussdiagramm des autonomen bzw. vollautomatisierten Fahrens mit Koordination,

- Fig. 2: ein Flussdiagramm des erfindungsgemäßen Verfahrens zur Koordination des Betriebs von autonom bzw. vollautomatisiert fahrenden Kraftfahrzeugen durch Arbitrierung,
- Fig. 3: eine Verkehrssituation für ein Ausführungsbespiel des erfindungsgemäßen Verfahrens,
- Fig. 4: eine weitere Verkehrssituation für ein Ausführungsbeispiel des erfindungsgemäßen Verfahrens,
- Fig. 5: eine dritte Verkehrssituation für ein Ausführungsbeispiel des erfindungsgemäßen Verfahrens,
- Fig. 6: eine vierte Verkehrssituation für ein Ausführungsbeispiel des erfindungsgemäßen Verfahrens.
- Fig. 7: eine fünfte Verkehrssituation für ein Ausführungsbeispiel eines erfindungsgemäßen Verfahrens, und
- Fig. 8: ein erfindungsgemäßes Kraftfahrzeug.

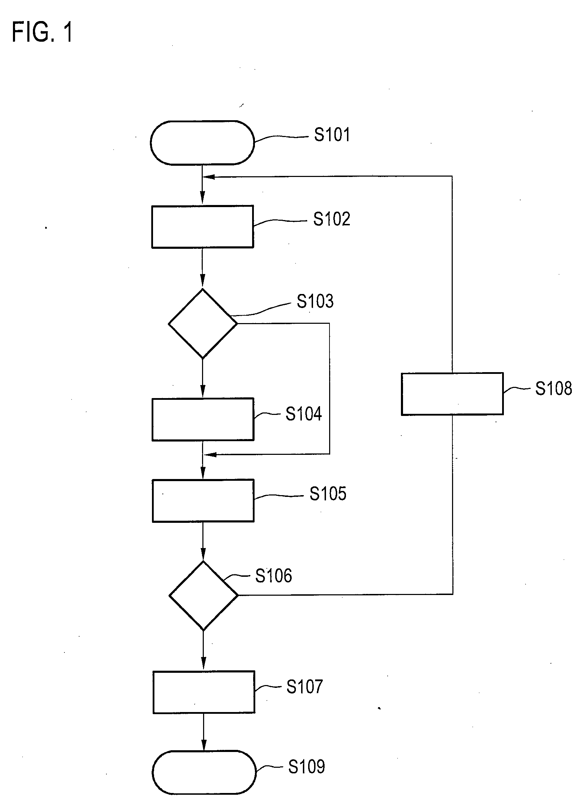

Fig. 1 zeigt ein Flussdiagramm des autonomen bzw. vollautomatisierten Fahrens mit Koordination. Nach dem Start des Verfahrens S101 wird im Schritt S102 zunächst eine Trajektorie für jedes Kraftfahrzeug ermittelt. Hierbei nutzt das Fahrzeugsystem des Kraftfahrzeugs Umgebungsinformationen, die die Umgebung des Kraftfahrzeugs beschreiben, und Egoinformationen, die den Zustand des Kraftfahrzeugs einschließlich einer Zielposition beschreiben, um eine nach den vorliegenden Informationen möglichst vorteilhafte Trajektorie zum Erreichen der Zielposition für das Kraftfahrzeug zu ermitteln. Da im weiteren Verfahren eine Koordination von Trajektorien erfolgen kann, ist in diesem Schritt auch die Ermittlung einer Trajektorie, die nach den Umgebungsinformationen nicht ohne Veränderung einer Position oder einer durch das Fahrzeugsystem vorausgesagten Bewegung mindestens eines der anderen Kraftfahrzeuge ausführbar ist, möglich. Dies ist insbesondere in dem Fall sinnvoll, in dem eine Blockadesituation vorliegt, also kein Erreichen des Ziels zumindest auf einem gewollten Weg möglich ist, oder in dem Fall, in dem die ermittelte Trajektorie besonders vorteilhaft ist. So kann das Fahrzeugsystem neben einer Trajektorie, die aus den tatsächlichen Umgebungsinformationen errechnet wird, auch Trajektorien errechnen, die Variationen der vorausgesagten Trajektorien anderer Kraftfahrzeuge umfassen und eine solche alternative Trajektorie nutzen, wenn diese gewisse Kriterien, wie ein schnelles Erreichen des Ziels, wesentlich besser erfüllt als die normal ermittelte Trajektorie. In diesem Fall ist jedoch eine Koordination notwendig und damit die Koordinationsbedingung in Schritt S103 erfüllt.

Im Schritt S103 wird durch das Fahrzeugsystem ermittelt, ob eine Koordination der Fahrbewegung mehrerer Kraftfahrzeuge erfolgen soll. Eine solche Koordination erfolgt insbesondere dann, wenn ein anderes Kraftfahrzeug oder eine Zentraleinrichtung ein solches Verfahren bereits initiiert hat. Dies ist insbesondere auch in Bereichen möglich, die zum koordinierten Fahren ausgebildet sind. In diesem Fall kann die Koordination über eine Zentraleinrichtung des Bereichs erfolgen, die ein solches Verfahren initiiert. Es ist aber auch möglich, dass das Fahrzeugsystem selbst ein solches Verfahren initiiert, beispielsweise beim Einfahren in einen Bereich der zum koordinierten Fahren ausgebildet ist, der jedoch keine Zentraleinrichtung aufweist oder bei Ermittlung einer Blockadebedingung. Soll keine Koordination der Fahrbewegungen erfolgen kann das Verfahren im Schritt S105 mit dem Ausführen der Fahreingriffe der Trajektorie fortgeführt werden.

Sonst wird im Schritt S104 eine Koordination der Trajektorien durch Arbitrierung durchgeführt. Diese wird später detailliert beschrieben. Sind die Trajektorien der Kraftfahrzeuge derart beschaffen, dass kein Konflikt vorliegt, also kein zeitlicher und räumlicher Überlapp der Trajektorien vorliegt und die Trajektorien aller Kraftfahrzeuge die jeweilige Zielposition erreichen, so besteht die Koordination ausschließlich in der Feststellung dieser Tatsache. Besteht ein Konflikt zwischen den Trajektorien, so führt die Koordination zur Arbitrierung und damit zur Anpassung der Trajektorie mindestens eines an dem Konflikt beteiligten Kraftfahrzeugs. Im Schritt S105 werden die Fahreingriffe der Trajektorien ausgeführt. Nach einem vorgegebenen Zeitintervall wird in Schritt S106 überprüft, ob das Fahrziel eines Kraftfahrzeugs erreicht ist. Ist dies der Fall, wird die Fahrt in Schritt S107 sicher beendet und das Verfahren wird in Schritt S109 beendet. Ist das Ziel noch nicht erreicht, werden in Schritt S108 die Egoinformationen und Umgebungsinformationen des Kraftfahrzeugs aktualisiert und das Verfahren wird ab Schritt S102 wiederholt, wobei eine Neuermittlung der Trajektorie nur dann notwendig ist, wenn die neu ermittelten Ego- bzw. Umgebungsinformationen zeigen, dass die bisherige Trajektorie unvorteilhaft ist.

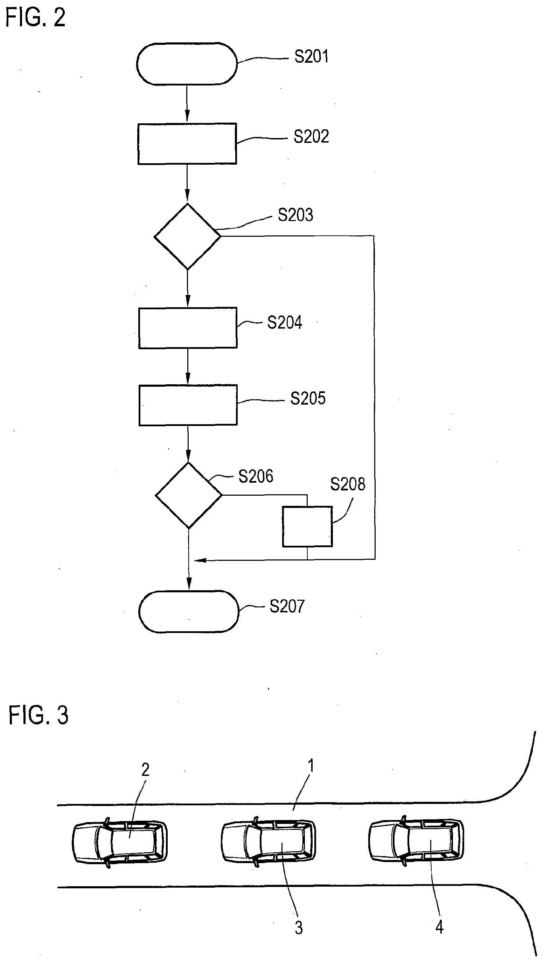

Fig. 2 ist ein Flussdiagramm des im Schritt S104 vorgenommenen Koordinations- und Arbitrierungsschritts. Nach dem Start des Verfahrens S201 findet im Schritt S202 ein Austausch von Trajektoriendaten statt. Die Trajektoriendaten der Fahrzeuge liegen in einem definierten Format vor. Es handelt sich um eine zeitliche Abfolge von Fahreingriffen. Aus diesen lässt ist leicht ein Ortsverlauf der Trajektorien bestimmen. Der Austausch der Trajektoriendaten findet über die Kommunikationseinrichtungen durch eine direkte Fahrzeug-zu-Fahrzeug-Kommunikation statt.

In Schritt S203 wird durch die Fahrzeugsysteme der Kraftfahrzeuge überprüft, ob ein Konflikt zwischen der Trajektorie des eigenen Fahrzeugs und den Trajektorien der anderen Fahrzeuge, die im Schritt S202 übermittelt wurden vorliegt. Hierzu werden die Abstände zwischen den Trajektorien zu jedem Zeitpunkt überprüft. Sinkt der Abstand zwischen den Trajektorien auf einen Wert, der kleiner ist als die Ausdehnung des Kraftfahrzeugs und ein Sicherheitsabstand, der von den Umgebungsbedingungen sowie vom Fahrzeugzustand, insbesondere der Geschwindigkeit, abhängig sein kann, so wird festgestellt, dass ein Konflikt zwischen den Trajektorien vorliegt. Auch wenn die Trajektorie eines Kraftfahrzeugs die entsprechende Zielposition nicht erreicht, wird ein Konflikt festgestellt. Liegt kein Konflikt vor, wird das Verfahren direkt mit Schritt S207 fortgesetzt und ist zu Ende. Liegt ein Konflikt zwischen den Trajektorien vor, so soll er durch Arbitrierung und durch Anpassung der Trajektorie mindestens eines am Konflikt beteiligten Kraftfahrzeugs behoben werden.

Hierzu wird zunächst im Schritt S204 eine Arbitrierungseinrichtung bestimmt. In diesem Ausführungsbeispiel werden die Fahrzeugsysteme der am Konflikt beteiligten Kraftfahrzeuge als Arbitrierungseinrichtungen genutzt. Die Bestimmung, welches der Fahrzeugsysteme genutzt wird, erfolgt durch eine Auswertung einer numerisch interpretierbaren Kennzeichnung des Fahrzeugsystems. Diese Auswahl der Arbitrierungseinrichtung kann durch ein Prioritätssignal, beispielsweise von einer Zentraleinrichtung oder einem Hilfsfahrzeug, verändert werden.

Nach Bestimmung der Arbitrierungseinrichtung findet in Schritt S205 eine Anpassung der Trajektorie mindestens eines der an dem Konflikt beteiligten Kraftfahrzeuge aufgrund wenigstens einer Arbitrierungsregel statt. Die Arbitrierungsregel ist im Fahrzeugsystem, das als Arbitrierungseinrichtung ausgewählt wurde, gespeichert oder wird, beispielsweise von einem lokalen Zentralsystem oder über das Internet, geladen. Es sind eine Vielzahl von Arbitrierungsregeln für eine Vielzahl von Situationen vorhanden. Auf die einzelnen Regeln soll hier nur beispielhaft eingegangen werden. Regeln können Prioritäten für gewisse Fahrzeuge umfassen, lösen Konfliktsituationen durch einfache Verkehrsregeln, beispielsweise "rechts vor links", auf und umfassen allgemeine Wegfindungsalgorithmen. Der Regelsatz von Fahrzeugen kann leicht verändert werden, um beispielsweise neue Wegfindungs- oder Regelsysteme zu implementieren.

Anschließend wird in Schritt S206 überprüft, ob die Anpassung der mindestens einen Trajektorie aufgrund der wenigstens einen Arbitrierungsregel zum Erreichen der Zielpositionen der Fahrzeuge führt. Ist dies der Fall, endet das Verfahren in Schritt S207, woraufhin ein Ausführen der Fahreingriffe durchgeführt werden kann (S105). Wurde keine Anpassung der mindestens einen Trajektorie gefunden, mit der die Fahrzeuge die Zielposition erreichen, so findet in Schritt S208 eine Ausnahmebehandlung statt. Im Rahmen der Ausnahmebehandlung kann eine weitere Arbitrierungseinrichtung gewählt, eine Person alarmiert, oder in dem Fall, indem keine andere Lösung des Konflikts möglich ist, die Fahrzeuge stillgelegt werden.

Fig. 3 zeigt eine Verkehrssituation für ein Ausführungsbeispiel des Verfahrens zur Koordination des Betriebs von autonom bzw. vollautomatisiert fahrenden Kraftfahrzeugen. Hier ist auf einem schmalen Fahrweg 1 ein Kraftfahrzeug 2 liegen geblieben. Hinter dem liegengebliebenen Kraftfahrzeug 2 befinden sich zwei weitere Kraftfahrzeuge 3 und 4. Kraftfahrzeug 4 detektiert nicht, dass das Kraftfahrzeug 2 liegengeblieben ist und wartet daher hinter Fahrzeug 3, da es sich weiterhin vorwärts bewegen soll. Das Fahrzeugsystem des Kraftfahrzeugs 3 erkennt, dass es sich hier um eine Blockade-Situation handelt, da über längere Zeit keine Trajektorie berechnet werden kann, die die Zielposition erreicht. Zudem erkennt das Fahrzeugsystem des Kraftfahrzeugs 3, dass das Kraftfahrzeugs 2 liegengeblieben ist und dass daher vorwärts gerichtete Trajektorien nicht möglich sind. Da eine Blockadebedingung vorliegt, ermittelt das Fahrzeugsystem des Kraftfahrzeugs 3 eine Trajektorie, die nach den Umgebungsinformationen nicht ohne Veränderung der Position des Kraftfahrzeugs 4 ausführbar ist und die rückwärts gerichtet ist.

Mit dem Vorliegen einer Blockadebedingung leitet das Fahrzeugsystem von Kraftfahrzeug 3 zudem eine Koordination der Trajektorien ein. Zunächst findet ein Austausch der Trajektorien statt. Das Fahrzeugsystem des Kraftfahrzeugs 3 übermittelt die eigene Trajektorie mit Hilfe der seiner Kommunikationseinrichtung an Kraftfahrzeug 4 und fordert dessen Trajektorie an. Die Trajektorie des Kraftfahrzeugs 4 zeigt Stillstand an, die Trajektorie des Kraftfahrzeugs 3 eine Rückwärtsfahrt.

Es besteht also ein Konflikt zwischen den Trajektorien zweier Kraftfahrzeuge. Damit ist eine Koordination zwischen den Kraftfahrzeugen notwendig. Als Arbitrierungseinrichtung wird ein dezentrales Netzwerk aus den Fahrzeugsystemen der Kraftfahrzeuge 3 und 4 bestimmt. Vor allem in Fahrsituationen, wie der hier gezeigten, in denen ein Fahrmanöver vorteilhaft für alle beteiligten Fahrzeuge ist, kann eine Arbitrierung schlicht durch das Übermitteln einer Wunschtrajektorie erfolgen. In diesem Fall übermittelt das Kraftfahrzeug 3 dem Kraftfahrzeug 4 den Wunsch, dass sich Kraftfahrzeug 4 rückwärts bewegt sowie die Information, dass eine Vorwärtsfahrt nicht möglich ist, da der Fahrweg 1 durch das liegengebliebene Kraftfahrzeug 2 versperrt ist. Das Fahrzeugsystem des Kraftfahrzeugs 4 analysiert daraufhin die Verkehrssituation, stellt ebenfalls fest, dass eine Vorwärtsfahrt nicht möglich ist und fährt damit rückwärts. Damit ist die Konfliktsituation behoben.

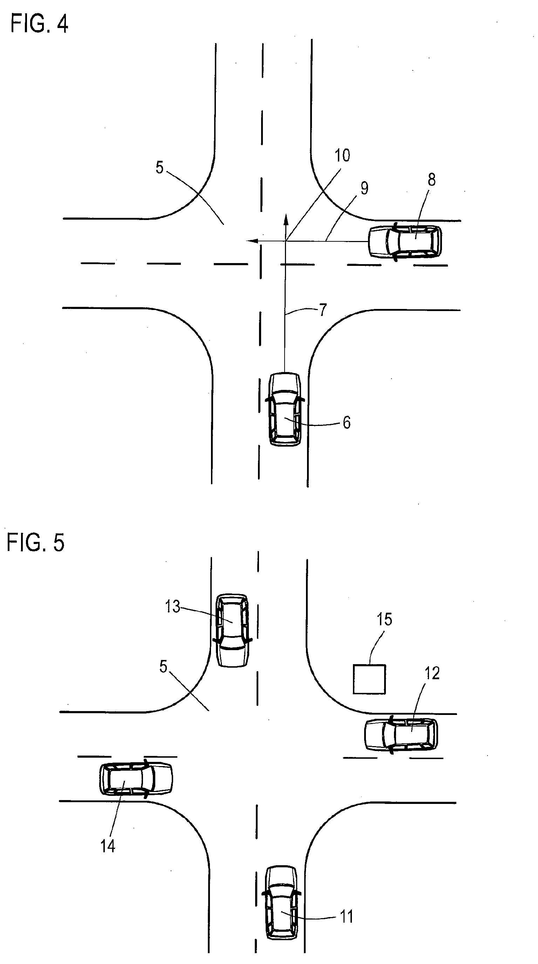

Fig. 4 zeigt eine weitere Verkehrssituation für ein Ausführungsbeispiel des Verfahrens zur Koordination des Betriebs von autonom bzw. vollautomatisiert fahrenden Kraftfahrzeugen. An einer Kreuzung 5 möchten Kraftfahrzeug 6 und Kraftfahrzeug 8 die Kreuzung 5 gerade überqueren. Die Fahrzeugsysteme der Kraftfahrzeuge 6 und 8 erkennen, dass eine Geradeausfahrt aufgrund des jeweils anderen Kraftfahrzeugs nicht möglich ist und bestimmen jeweils eine Trajektorie, die einen Stillstand der Kraftfahrzeuge 3,4 beschreibt. Ohne Bestehen einer Vorfahrtsregelung liegt als wiederum eine Blockadesituation vor. Beide Kraftfahrzeuge 3,4 erkennen diese und ermitteln jeweils eine Trajektorie 7,9. Da eine sichere Ausführung dieser Trajektorien 7,9 nicht möglich ist liegt eine Koordinationsbedingung vor. Damit werden die Trajektorien 7,9 ausgetauscht und durch die Fahrzeugeinrichtungen der Kraftfahrzeuge 6,8 auf Konflikte überprüft. Folgen beide Kraftfahrzeuge 6, 8 ihren Trajektorien 7, 9, so entsteht am Konfliktpunkt 10 ein Konflikt. Die Fahrzeugsysteme der Kraftfahrzeuge 6, 8 stellen diesen Konflikt fest und leiten eine Arbitrierung ein.

In diesem Ausführungsbeispiel ist die Arbitrierungseinrichtung ein Fahrzeugsystem und jedem Kraftfahrzeug ist eine eindeutige, numerisch interpretierbare Kennzeichnung zugeordnet. Die Auswahl des Fahrzeugsystems, das als Arbitrierungseinrichtung dient, erfolgt durch Auswertung der numerisch interpretierbaren Kennzeichnung des Kraftfahrzeugs. Hier hat das Kraftfahrzeugs 6 die niedrigere Kennzeichnung. Damit dient das Fahrzeugsystem des Kraftfahrzeugs 6 als Arbitrierungseinrichtung. Es wird eine aus den allgemeinen Verkehrsregeln abgeleitete Arbitrierungsregel genutzt, dass von rechts kommende Kraftfahrzeuge Vorfahrt haben. Die Nutzung dieser Regel führt zur Anpassung der Trajektorie des Kraftfahrzeugs 6. Die Trajektorie wird dermaßen angepasst, dass das Kraftfahrzeug 6 zunächst stillsteht, bis das Kraftfahrzeug 8 die Kreuzung 5 überquert hat. Anschließend überquert das Kraftfahrzeug 6 die Kreuzung 5.

Nun soll angenommen werden, dass sich die Kreuzung 5 in Fig. 4 in einem Bereich befindet, der zum koordinierten Fahren von autonom bzw. vollautomatisiert fahrenden Kraftfahrzeugen ausgebildet ist. Zudem sollen die Fahrzeugsensoren der Kraftfahrzeuge 6 und 8 zunächst das jeweils andere Kraftfahrzeug in der dargestellten Verkehrssituation noch nicht detektieren. In diesem Fall werden die Kraftfahrzeuge 6, 8 zunächst die Trajektorien 7 und 9 ermitteln. Da jedoch in einem Bereich, der zum koordinierten Fahren ausgebildet ist, stets eine Koordination zwischen den Kraftfahrzeugen erfolgt, werden die Trajektorien 7,9 durch die Kommunikationssysteme der Kraftfahrzeuge ausgetauscht und es kann bereits frühzeitig ein Konflikt der Trajektorien 7,9 am Konfliktpunkt 10 festgestellt werden. Damit ist es bereits möglich, den Konflikt wie oben beschrieben aufzulösen. In diesem Fall ist die Auflösung des Konflikts jedoch möglich, bevor ein Stillstand beider Kraftfahrzeuge 6,8 erfolgt. Bei rechtzeitiger Ermittlung des Konflikts ist es beispielsweise möglich, dass die Trajektorie des Kraftfahrzeugs 6 so angepasst wird, dass die Geschwindigkeit nur geringfügig reduziert wird, wodurch jedoch dennoch ein Passieren der Kreuzung durch Kraftfahrzeug 8 möglich ist, bevor Kraftfahrzeug 6 in die Kreuzung einfährt.

Fig. 5 zeigt eine dritte Verkehrssituation für ein Ausführungsbeispiel des Verfahrens zur Koordination des Betriebs von autonom bzw. vollautomatisiert fahrenden Kraftfahrzeugen. An Kreuzung 5 befinden sich nun vier autonom bzw. vollautomatisiert fahrende Kraftfahrzeuge 11, 12, 13 und 14. Auch in diesem Fall wollen alle Kraftfahrzeuge die Kreuzung 5 gerade überqueren. Da dies nicht möglich ist bleiben die Kraftfahrzeuge 11, 12, 13, 14 stehen und es entsteht eine Blockade-Situation. Diese wird von den Fahrzeugsystemen der Kraftfahrzeuge 11, 12, 13, 14 ermittelt und daher bestimmen die Fahrzeugsysteme jeweils eine Trajektorie, die ein gerades Fahren über die Kreuzung 5 beschreibt und Tauschen diese Trajektorien über die jeweiligen Kommunikationseinrichtungen der Kraftfahrzeuge 11, 12, 13, 14 aus. Da ein Konflikt vorliegt, muss eine Arbitrierungseinrichtung bestimmt werden.

Aufgrund der Kennzeichnung des Kraftfahrzeugs 13 wird das Fahrzeugsystem des Kraftfahrzeugs 13 zur Arbitrierungseinrichtung bestimmt. Das Fahrzeugsystem versucht auch hier die im Ausführungsbeispiel zu Fig. 4 genutzte Rechts-vor-links-Regel zu nutzen. Mit dieser Arbitrierungsregel ist hier keine Lösung des Konflikts möglich. Da das Fahrzeugsystem des Kraftfahrzeugs 13 keine weiteren Arbitrierungsregel für diese Verkehrssituation enthält, wird im Rahmen der Fehlerbehandlung eine weitere Arbitrierungseinrichtung, hier eine Zentraleinrichtung 15, bestimmt. Die Zentraleinrichtung 15 greift auf eine weitere Arbitrierungsregel zurück, die den unterschiedlichen Einmündungen der Kreuzung 5 feste Prioritäten zuteilt. Damit kann der Konflikt aufgelöst werden.

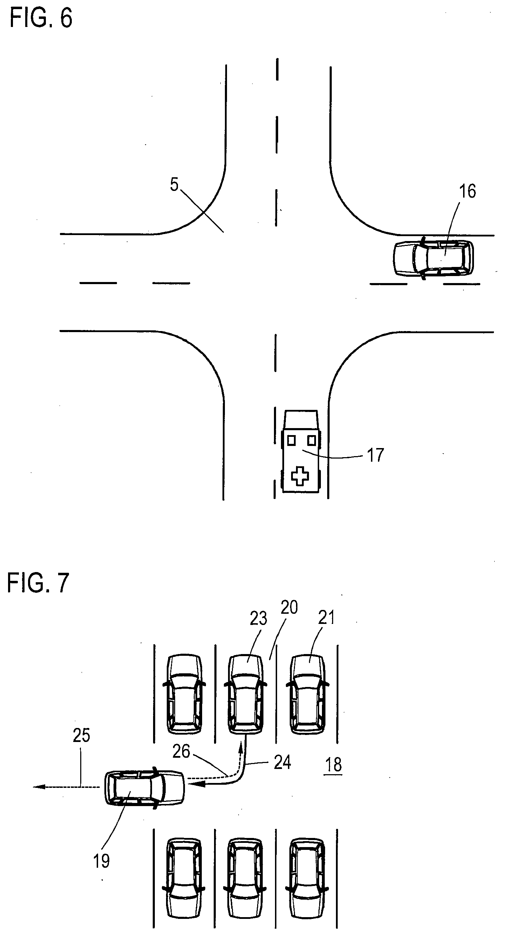

Fig. 6 zeigt eine vierte Verkehrssituation für ein Ausführungsbeispiel eines Verfahrens zur Koordination des Betriebs von autonom bzw. vollautomatisiert fahrenden Kraftfahrzeugen. Die Verkehrssituation ist sehr ähnlich zur Verkehrssituation, die in Fig. 4 gezeigt wurde. Kraftfahrzeug 17 ist jedoch ein Krankenwagen. Auch hier wollen zwei Kraftfahrzeuge 16, 17 die Kreuzung 5 gerade überqueren. Die Feststellung einer Blockade, Ermittlung von Trajektorien und Übertragung dieser sowie die Bestimmung einer Arbitrierungseinrichtung erfolgt zunächst wie oben beschrieben. Nach Auswertung der Kennzeichnung der Kraftfahrzeuge 16, 17 wird zunächst die Fahrzeugeinrichtung des Kraftfahrzeugs 16 zur Arbitrierungseinrichtung bestimmt. Kraftfahrzeug 17, der Krankenwagen, sendet jedoch ein Prioritätssignal, das die ursprüngliche Auswahl der Arbitrierungseinrichtung überschreibt und das Fahrzeugsystem des Kraftfahrzeugs 17 zur Arbitrierungseinrichtung bestimmt. Da es sich um einen Krankenwagen handelt, sind die Arbitrierungsregeln, die vom Fahrzeugsystem des Kraftfahrzeugs 17 genutzt werden, unterschiedlich von den Arbitrierungsregeln, die in anderen Kraftfahrzeugen genutzt werden. Sie sind alleinig dafür ausgelegt, ein möglichst schnelles Vorankommen des Krankenwagens bei gleichzeitiger Gewährleistung der Sicherheit zu ermöglichen. Damit wird der Konflikt hier gelöst, indem die Fahrzeugeinrichtung des Kraftfahrzeugs 17 eine neue Trajektorie für das Kraftfahrzeug 16 bestimmt, die besagt, dass das Kraftfahrzeug 16 zunächst steht, bis das Kraftfahrzeug 17 die Kreuzung 5 passiert hat und erst anschließend die Kreuzung 5 überquert.

Fig. 7 zeigt eine fünfte Verkehrssituation für ein Ausführungsbeispiel des Verfahrens zur Koordination des Betriebs von autonom bzw. vollautomatisiert fahrenden Kraftfahrzeugen. In einem Parkhaus 18 ist ein Kraftfahrzeug 19 auf der Suche nach einem Parkplatz 20. Kraftfahrzeug 19 detektiert, das Kraftfahrzeug 23 den Parkplatz 20 verlässt und möchte in Parkplatz 20 einparken. Daher ermittelt Kraftfahrzeug 19 zunächst eine Trajektorie, die Stillstand anzeigt. Das Fahrzeugsystem des Kraftfahrzeugs 23 ermittelt, dass Kraftfahrzeug 19 so nah an Parkplatz 20 steht, dass ein Ausparken mit Trajektorie 24 nicht möglich ist. Daher ermittelt auch Kraftfahrzeug 23 zunächst eine Trajektorie, die Stillstand anzeigt. Das Fahrzeugsystem des Kraftfahrzeugs 19 stellt fest, dass es sich um eine potentielle Blockade-Situation handelt und initiiert die Koordination, indem es seine Trajektorie (Stillstand) an Kraftfahrzeug 23 übermittelt und dessen Trajektorie (Stillstand) anfordert. Als Arbitrierungseinrichtung wird zunächst ein dezentrales Netzwerk, das aus den Fahrzeugsystemen der Kraftfahrzeuge 19 und 23 besteht, bestimmt. In einem solchen dezentralen Netzwerk ist es möglich, dass das Fahrzeugsystem eines Kraftfahrzeugs Wunschtrajektorien, also Trajektorien, die ein anderes Kraftfahrzeug ausführen soll, an das Fahrzeugsystem eines anderen Kraftfahrzeugs übermittelt. Hier analysiert das Fahrzeugsystem des Kraftfahrzeugs 23 die Verkehrssituation und ermittelt eine zweiteilige Wunschtrajektorie für Kraftfahrzeug 19, die über die Kommunikationssysteme der Kraftfahrzeuge 19, 23 übermittelt wird.

Die zweiteilige Wunschtrajektorie ist in Fig. 7 gezeigt. Im ersten Teil der Wunschtrajektorie 25 soll das Parkplatz 20 suchende Kraftfahrzeug 19 zurücksetzten. Dann soll es warten, bis Kraftfahrzeug 23 den Parkplatz 20 verlassen hat und dann, im zweiten Teil der Wunschtrajektorie 26, erfolgt ein Einparken des Parkplatz suchenden Kraftfahrzeugs 19 in den Parkplatz 20.

Mit dieser angepassten Trajektorie wäre ein Ausparken des Kraftfahrzeugs 23 möglich.

Das Fahrzeugsystem des Parkplatz 20 suchenden Kraftfahrzeugs 19 stellt fest, dass das Ziel des Einparkens mit dieser Trajektorie erreicht werden kann. Damit nimmt es diese Trajektorie an und übermittelt dem ausparkenden Kraftfahrzeug 23 dies. Damit ist der Konflikt gelöst.

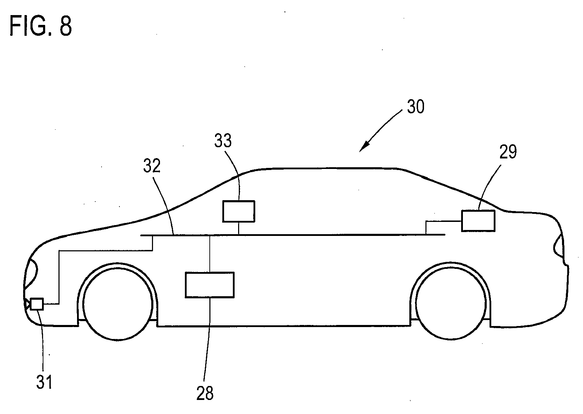

Fig. 8 zeigt ein Kraftfahrzeug, welches ein Fahrzeugsystem, das zur Teilnahme am Verfahren zur Koordination des Betriebs von autonom bzw. vollautomatisiert fahrenden Kraftfahrzeugen ausgebildet ist, umfasst. Das Kraftfahrzeug 30 umfasst eine Vielzahl von Sensoren, von denen beispielhaft eine Kamera 31 gezeigt ist. Über einen CAN-Bus 32 kommunizieren diese Sensoren mit einem Fahrzeugsystem 28. Das Fahrzeugsystem 28 nutzt die aus den Sensoren, beispielsweise der Kamera 31, gewonnen Umweltinformationen, sowie Egoinformationen des Kraftfahrzeugs wie beispielsweise eine Zielposition um eine Trajektorie zu bestimmen. Die Ermittlung der Trajektorie kann mit einer Vielzahl von unterschiedlichen Strategien erfolgen. Beispielsweise kann ein besonders energieeffizientes oder ein besonders schnelles Erreichen des Zieles gewünscht sein. Die Auswahl der Strategien kann automatisch, beispielsweise zufällig, oder durch eine Auswahl mit einem Bedienelement 33 vorgenommen werden. Wird durch einen der Sensoren, beispielsweise die Kamera 31 oder durch das Empfangen von Kommunikationsdaten durch die Kommunikationseinrichtung 29 ein weiteres Kraftfahrzeug in der Umgebung detektiert, so kann diesem, wenn eine Koordinationsbedingung erfüllt ist, über die Kommunikationseinrichtung 29 die Fahrzeugtrajektorie übermittelt werden. Die Kommunikation zwischen Fahrzeugsystem 28 und Kommunikationseinrichtung 29 erfolgt ebenfalls über den CAN-Bus 32. Alternativ ist in Bereichen, in denen autonomes bzw. vollautomatisiertes Fahren vorgesehen ist und eine Zentraleinrichtung zur Arbitrierung zwischen Kraftfahrzeugen 30 bereit gestellt ist, eine Übertragung der Trajektorieninformation über die Kommunikationseinrichtung 29 zu dieser Zentraleinrichtung möglich. Zudem können über die Kommunikationseinrichtung 29 Trajektoriendaten anderer Kraftfahrzeuge empfangen werden und über den CAN-Bus 32 an das Fahrzeugsystem 28 übertragen werden.

Das Fahrzeugsystem 28 ist zur Überprüfung der empfangenen Trajektorieninformationen auf Vorliegen eines Konflikt zwischen der eigenen Trajektorie und einer dieser Trajektorien ausgebildet. Es ist auch möglich, dass über die Kommunikationseinrichtung 29 Informationen einer Zentraleinrichtung empfangen werden, dass ein solcher Konflikt vorliegt.

Das Fahrzeugsystem 28 ist zur Teilnahme an einem Arbitrierungsverfahren ausgebildet. Diese Teilnahme kann entweder als Arbitrierungseinrichtung oder passiv erfolgen. Wird das Fahrzeugsystem 28 im Rahmen des Arbitrierungsverfahren zur Arbitrierungseinrichtung bestimmt, so ist es ausgebildet, die Trajektoriendaten aller Fahrzeuge die am Konflikt beteiligt sind sowie alle verfügbaren Ego- und Umweltinformationen auszuwerten und durch Anwendung einer Arbitrierungsregel mindestens eine der Trajektorien anzupassen. Ist die angepasste Trajektorie nicht die eigene Trajektorie, wird die angepasste Trajektorie über den CAN-Bus 32 an die Kommunikationseinrichtung 29 übermittelt, und von dort an das der Trajektorie zugeordnete Kraftfahrzeug übermittelt. Wird das Fahrzeugsystem 28 nicht zur Arbitrierungseinrichtung bestimmt, so ist es ausschließlich notwendig, dass das Fahrzeugsystem 28 eine durch die Kommunikationseinrichtung 29 empfangene vorgeschlagene oder vorgeschriebene Trajektorie bewerten und ausführen kann.

## Patentansprüche

1. Verfahren zur Koordination des Betriebs von vollautomatisiert fahrenden Kraftfahrzeugen, bestehend aus den Schritten:
- Ermittlung einer durch mindestens einen Fahreingriff beschriebenen Trajektorie (7, 9) für jedes Kraftfahrzeug (3, 4, 6, 8, 11, 12, 13, 14, 16, 17, 19, 23, 30) aus Egoinformationen, die den Zustand des Kraftfahrzeugs (3, 4, 6, 8, 11, 12, 13, 14, 16, 17, 19, 23, 30) einschließlich einer Zielposition beschreiben, und Umgebungsinformationen, die die Umgebung des Kraftfahrzeugs (3, 4, 6, 8, 11, 12, 13, 14, 16, 17, 19, 23, 30) beschreiben, durch ein Fahrzeugsystem (28) des Kraftfahrzeugs (3, 4, 6, 8, 11, 12, 13, 14, 16, 17, 19, 23, 30),
- Ermitteln, ob mindestens eine eine notwendige Koordination anzeigende Koordinationsbedingung vorliegt, durch das Fahrzeugsystem (28) des Kraftfahrzeugs (3, 4, 6, 8, 11, 12, 13, 14, 16, 17, 19, 23, 30),
- Falls die Koordinationsbedingung oder mindestens eine der Koordinationsbedingungen vorliegt, Ausführen der folgenden Schritte:
• Austausch von Trajektoriendaten, die die Trajektorie (7, 9) beschreiben, über eine Kommunikationsverbindung durch eine fahrzeugeigene Kommunikationseinrichtung (29) jedes Kraftfahrzeugs (3, 4, 6, 8, 11, 12, 13, 14, 16, 17, 19, 23, 30),
• Prüfung der Trajektoriendaten der Kraftfahrzeuge (3, 4, 6, 8, 11, 12, 13, 14, 16, 17, 19, 23, 30) auf Konflikte, die aufgrund einer räumlichen und zeitlichen Überlappung der Trajektorien (7, 9) von mindestens zwei der Kraftfahrzeuge (3, 4, 6, 8, 11, 12, 13, 14, 16, 17, 19, 23, 30) und/oder Nichterreichen der Zielposition mindestens eines der Kraftfahrzeuge (3, 4, 6, 8, 11, 12, 13, 14, 16, 17, 19, 23, 30) vorliegen,
• Falls ein Konflikt vorliegt:
Anpassung der Trajektorie (7, 9) mindestens eines an dem Konflikt beteiligten Kraftfahrzeugs (3, 4, 6, 8, 11, 12, 13, 14, 16, 17, 19, 23, 30) aufgrund wenigstens einer Arbitrierungsregel, die durch eine Arbitrierungseinrichtung ausgewertet wird, und Übertragen der jeweiligen angepassten Trajektorie über die jeweilige Kommunikationseinrichtung (29) an das jeweilige Kraftfahrzeug (3, 4, 6, 8, 11, 12, 13, 14, 16, 17, 19, 23, 30), und
- Ausführen der von der jeweiligen Trajektorie (7, 9) beschriebenen Fahreingriffe durch jedes Kraftfahrzeug (3, 4, 6, 8, 11, 12, 13, 14, 16, 17, 19, 23, 30), wobei durch das Kraftfahrzeug (3, 4, 6, 8, 11, 12, 13, 14, 16, 17, 19, 23, 30), dessen Trajektorie (7, 9) angepasst wurde, die durch die jeweilige angepasste Trajektorie beschriebenen Fahreingriffe ausgeführt werden.

2. Verfahren nach Anspruch 1, **dadurch gekennzeichnet, dass** die Koordinationsbedingung oder eine der Koordinationsbedingungen eine Ermittlung einer eine Blockade anzeigende Blockadebedingung durch das Fahrzeugsystem (28) ist, wobei bei Vorliegen einer Blockadebedingung das Fahrzeugsystem (28) insbesondere zum Ermitteln einer Trajektorie (7, 9), die nach den Umgebungsinformationen nicht ohne Veränderung einer Position oder einer durch das Fahrzeugsystem vorausgesagten Bewegung mindestens eines der anderen Kraftfahrzeuge ausführbar ist, ausgebildet ist.

3. Verfahren nach Anspruch 2, **dadurch gekennzeichnet, dass** die Blockadebedingung oder eine der Blockadebedingungen eine wiederholte Ermittlung einer Trajektorie (7, 9), die die Zielposition nicht erreicht, über einen vorgegebenen oder vorgebbaren Zeitraum ist.

4. Verfahren nach Anspruch 2 oder 3, **dadurch gekennzeichnet, dass** die Blockadebedingung oder eine der Blockadebedingungen ist, dass innerhalb eines vorgegebenen oder vorgebbaren Zeitintervalls ein Abstands zwischen Kraftfahrzeug (3, 4, 6, 8, 11, 12, 13, 14, 16, 17, 19, 23, 30) und Zielposition niemals kleiner ist als ein kleinster Abstand zwischen Kraftfahrzeug (3, 4, 6, 8, 11, 12, 13, 14, 16, 17, 19, 23, 30) und Zielposition vor Beginn dieses Zeitintervalls.

5. Verfahren nach einem der Ansprüche 2 bis 4, dass die Blockadebedingung oder eine der Blockadebedingungen eine zeitliche oder räumliche Abweichung von einer Idealtrajektorie ist, die größer ist als eine vorgegebene oder vorgebbare zeitliche oder räumliche Abweichung, wobei die Idealtrajektorie unter Vernachlässigung mindestens eines Kraftfahrzeugs (3, 4, 6, 8, 11, 12, 13, 14, 16, 17, 19, 23, 30) berechnet wird.

6. Verfahren nach einem der vorangehenden Ansprüche, **dadurch gekennzeichnet, dass** die Koordinationsbedingung oder eine der Koordinationsbedingungen ein Aufenthalt des Kraftfahrzeugs (3, 4, 6, 8, 11, 12, 13, 14, 16, 17, 19, 23, 30) einem Bereich, der zum koordinierten Fahren ausgebildet ist, ist, wobei das Fahrzeugsystem (28) zur Bestimmung des Aufenthalts in einem solchen Bereich insbesondere zur Nutzung von Daten einer Positionsbestimmungseinrichtung und/oder der Kommunikationseinrichtung (29) ausgebildet ist.

7. Verfahren nach Anspruch einem der vorangehenden Ansprüche,
**dadurch gekennzeichnet,**
**dass** die Arbitrierungseinrichtung das Fahrzeugsystem (28) eines Kraftfahrzeugs (3, 4, 6, 8, 11, 12, 13, 14, 16, 17, 19, 23, 30) ist, insbesondere eines Kraftfahrzeugs (3, 4, 6, 8, 11, 12, 13, 14, 16, 17, 19, 23, 30), das an einem Konflikt beteiligt ist, und die Trajektoriendaten der mindestens einen angepassten Trajektorie über die fahrzeugeigene Kommunikationseinrichtung (29) an das der Trajektorie zugeordnete Kraftfahrzeug (3, 4, 6, 8, 11, 12, 13, 14, 16, 17, 19, 23, 30) übermittelt werden.

8. Verfahren nach Anspruch 7,
**dadurch gekennzeichnet,**
**dass** das Kraftfahrzeug (3, 4, 6, 8, 11, 12, 13, 14, 16, 17, 19, 23, 30), dessen Fahrzeugsystem (28) die Arbitrierungseinrichtung ist, zufällig bestimmt wird.

9. Verfahren nach Anspruch 7,
**dadurch gekennzeichnet,**
**dass** durch die Kommunikationseinrichtung (29) mindestens eines der Kraftfahrzeuge (3, 4, 6, 8, 11, 12, 13, 14, 16, 17, 19, 23, 30) eine Bestimmungsinformation, zur Bestimmung des Kraftfahrzeugs (3, 4, 6, 8, 11, 12, 13, 14, 16, 17, 19, 23, 30), dessen Fahrzeugsystem (28) die Arbitrierungseinrichtung ist, übertragen wird, insbesondere eine Prioritätsinformation.

10. Verfahren nach einem der Ansprüche 1 bis 6,
**dadurch gekennzeichnet,**
**dass** die Arbitrierungseinrichtung eine Zentraleinrichtung (15) ist, wobei die Zentraleinrichtung (15) eine Kommunikationseinrichtung umfasst oder mit dieser über ein Kommunikationsnetzwerk verbunden ist, die mit den Kommunikationseinrichtungen (29) der mindestens zwei Kraftfahrzeuge (3, 4, 6, 8, 11, 12, 13, 14, 16, 17, 19, 23, 30) kommuniziert, und die Trajektoriendaten der mindestens einen angepassten Trajektorie über diese Kommunikationseinrichtung (29) an das der Trajektorie (7, 9) zugeordnete Kraftfahrzeug (3, 4, 6, 8, 11, 12, 13, 14, 16, 17, 19, 23, 30) übermittelt werden.

11. Verfahren nach Anspruch einem der Ansprüche 1 bis 6,
**dadurch gekennzeichnet,**
**dass** die Arbitrierungsrichtung ein dezentrales Netzwerk ist, das insbesondere die Fahrzeugsysteme (28) jener Kraftfahrzeuge (3, 4, 6, 8, 11, 12, 13, 14, 16, 17, 19, 23, 30), die an einem Konflikt beteiligt sind, oder die Fahrzeugsysteme (28) aller Fahrzeuge (3, 4, 6, 8, 11, 12, 13, 14, 16, 17, 19, 23, 30) umfasst.

12. Verfahren nach Anspruch 11,
**dadurch gekennzeichnet,**
**dass** das Fahrzeugsystems (3, 4, 6, 8, 11, 12, 13, 14, 16, 17, 19, 23, 30) mindestens eines der Kraftfahrzeuge für mindestens ein anderes Kraftfahrzeug (3, 4, 6, 8, 11, 12, 13, 14, 16, 17, 19, 23, 30) Wunschtrajektorien (25, 26) ermittelt, und diese über das dezentrale Netzwerk ausgetauscht werden.

13. Verfahren nach einem der vorangehenden Ansprüche,
**dadurch gekennzeichnet,**
**dass** durch die Kommunikationseinrichtung (29) mindestens eines der Kraftfahrzeuge (3, 4, 6, 8, 11, 12, 13, 14, 16, 17, 19, 23, 30) mindestens eine Fahrzeuginformation übertragen wird, insbesondere eine Position des Fahrzeugs, die Zielposition, die das Kraftfahrzeug (3, 4, 6, 8, 11, 12, 13, 14, 16, 17, 19, 23, 30), insbesondere innerhalb eines Zeitfensters, erreichen soll, Fahrmöglichkeitsinformationen, die mögliche Fahrmanöver beschreiben, und/oder eine Prioritätsinformation, die als eine Eingangsgröße der Arbitrierungsregel zur Anpassung der mindestens einen Trajektorie (7, 9) genutzt wird.

14. Verfahren nach einem der vorangehenden Ansprüche,
**dadurch gekennzeichnet,**
**dass** durch die Kommunikationseinrichtung (29) mindestens eines der Kraftfahrzeuge (3, 4, 6, 8, 11, 12, 13, 14, 16, 17, 19, 23, 30) mindestens eine Umgebungsinformation übertragen wird, insbesondere mindestens eine ermittelte Positionen eines Fahrzeugs oder Hindernisses.

15. Verfahren nach einem der vorangehenden Ansprüche,
**dadurch gekennzeichnet,**
**dass** in dem Fall, in dem keine Anpassung der mindestens einen Trajektorie (7, 9) aufgrund der wenigstens einen Arbitrierungsregel zum Erreichen der Zielpositionen der Fahrzeuge möglich ist, eine Bestimmung einer anderen Arbitrierungseinrichtung erfolgt, wobei die andere Arbitrierungseinrichtung insbesondere ein Fahrzeugsystem (28) eines bisher nicht am Arbitrierungsprozess beteiligten Kraftfahrzeugs (3, 4, 6, 8, 11, 12, 13, 14, 16, 17, 19, 23, 30) oder eine Zentraleinrichtung (15) ist.

16. Verfahren nach einem der vorangehenden Ansprüche,
**dadurch gekennzeichnet,**
**dass** in dem Fall, in dem keine Anpassung der mindestens einen Trajektorie (7, 9) aufgrund der wenigstens einen Arbitrierungsregel zum Erreichen der Zielpositionen der Fahrzeuge möglich ist, eine Alarmeinrichtung aktiviert wird, die eine Person durch ein Tonsignal, ein visuelles Signal oder ein Kommunikationsnetzwerk benachrichtigt.

17. Verfahren nach einem der vorangehenden Ansprüche,
**dadurch gekennzeichnet,**
**dass** in dem Fall, in dem keine Anpassung der mindestens einen Trajektorie (7, 9) aufgrund der wenigstens einen Arbitrierungsregel zum Erreichen der Zielpositionen der Fahrzeuge möglich ist, eine Stilllegung der Kraftfahrzeuge (3, 4, 6, 8, 11, 12, 13, 14, 16, 17, 19, 23, 30) erfolgt.

18. Verfahren nach einem der vorangehenden Ansprüche,
**dadurch gekennzeichnet,**
**dass** nach Anpassung der mindestens einen Trajektorie (7, 9) durch die Arbitrierugseinrichtung die Ausführung der Fahreingriffe der Trajektorien (7, 9), insbesondere durch Empfang von übermittelten Positionsdaten und/oder durch Sensordaten, überwacht wird und bei Abweichung mindestens eines der Kraftfahrzeuge von der zugeordneten Trajektorie (7, 9) mindestens eine Trajektorie (7, 9) angepasst und über die der Arbitrierungseinrichtung zugeordnete Kommunikationseinrichtung (29) an das der Trajektorie (7, 9) zugeordnete Kraftfahrzeug (3, 4, 6, 8, 11, 12, 13, 14, 16, 17, 19, 23, 30) übermittelt wird.

19. Kraftfahrzeug (30), umfassend mindestens einen Sensor (31) sowie eine Kommunikationseinrichtung (29) zur Fahrzeug-zu-Fahrzeug und/oder Fahrzeug-zu-Infrastrukturkommunikation, sowie ein Fahrzeugsystem (28),
**dadurch gekennzeichnet,**
**dass** das Fahrzeugsystem zur Teilnahme am Verfahren eines der vorangehenden Ansprüche ausgebildet ist.

## Claims

1. Method for co-ordinating the operation of fully automated moving motor vehicles, consisting of the steps:
- determination of a trajectory (7, 9) described by at least one driving intervention for each vehicle (3, 4, 6, 8, 11, 12, 13, 14, 16, 17, 19, 23, 30) from egoinformation that describes the state of the motor vehicle (3, 4, 6, 8, 11, 12, 13, 14, 16, 17, 19, 23, 30) including a target position, and environmental information that describes the environment of the motor vehicle (3, 4, 6, 8, 11, 12, 13, 14, 16, 17, 19, 23, 30), by a vehicle system (28) of the motor vehicle (3, 4, 6, 8, 11, 12, 13, 14, 16, 17, 19, 23, 30),
- determining through the vehicle system (28) of the motor vehicle (3, 4, 6, 8, 11, 12, 13, 14, 16, 17, 19, 23, 30) whether there exists at least one coordination condition indicating a necessary co-ordination
- if the co-ordination condition or at least one of the co-ordination conditions exists, executing the following steps:
• exchanging trajectory data that describe the trajectory (7, 9) via a communication connection through an on-board vehicle communication device (29) of each motor vehicle (3, 4, 6, 8, 11, 12, 13, 14, 16, 17, 19, 23, 30),
• checking the trajectory data of the motor vehicles (3, 4, 6, 8, 11, 12, 13, 14, 16, 17, 19, 23, 30) for conflicts that exist on account of a spatial and time overlapping of the trajectories (7, 9) of at least two of the motor vehicles (3, 4, 6, 8, 11, 12, 13, 14, 16, 17, 19, 23, 30) and/or nonachievement of the target position by at least one of the motor vehicles (3, 4, 6, 8, 11, 12, 13, 14, 16, 17, 19, 23, 30),
• if a conflict exists:
adjusting the trajectory (7, 9) of at least one motor vehicle (3, 4, 6, 8, 11, 12, 13, 14, 16, 17, 19, 23, 30) involved in the conflict on the basis of at least one assessment criterion that is evaluated by an assessment device, and transmission of the respective adjusted trajectory via the respective communication device (29) to the respective motor vehicle (3, 4, 6, 8, 11, 12, 13, 14, 16, 17, 19, 23, 30), and
- execution of the driving interventions described by the respective trajectories (7, 9) by each motor vehicle (3, 4, 6, 8, 11, 12, 13, 14, 16, 17, 19, 23, 30), wherein the driving interventions described by the respective adjusted trajectory are executed by the motor vehicle (3, 4, 6, 8, 11, 12, 13, 14, 16, 17, 19, 23, 30) whose trajectory (7, 9) was adjusted.

2. Method according to claim 1, **characterised in that** the co-ordination condition or one of the co-ordination conditions is a determination of a blocking condition indicating a blocking by the vehicle system (28), wherein if a blocking condition exists the vehicle system (28) is configured in particular to determine a trajectory (7, 9) that according to the environmental information cannot be executed without changing a position or a movement predicted by the vehicle system, of at least one of the other motor vehicles.

3. Method according to claim 2, **characterised in that** the blocking condition or one of the blocking conditions is a repeated determination of a trajectory (7, 9) that does not reach the target position within a predetermined or predeterminable time.

4. Method according to claim 2 or 3, **characterised in that** the blocking condition or one of the blocking conditions is that within a predetermined or predeterminable time interval a distance between a vehicle (3, 4, 6, 8, 11, 12, 13, 14, 16, 17, 19, 23, 30) and the target position is never smaller than the smallest distance between a vehicle (3, 4, 6, 8, 11, 12, 13, 14, 16, 17, 19, 23, 30) and the target position before the start of this time interval.

5. Method according to one of claims 2 to 4, **characterised in that** the blocking condition or one of the blocking conditions is a time or spatial deviation from an ideal trajectory that is larger than a predetermined or predeterminable time or spatial deviation, wherein the ideal trajectory is calculated while ignoring at least one motor vehicle (3, 4, 6, 8, 11, 12, 13, 14, 16, 17, 19, 23, 30).

6. Method according to one of the preceding claims, **characterised in that** the coordination condition or one of the co-ordination conditions is a stopping of the vehicle (3, 4, 6, 8, 11, 12, 13, 14, 16, 17, 19, 23, 30) in a region that is configured for co-ordinated driving, wherein the vehicle system (28) is configured to determine the stopping in such a region, in particular to utilise data of a position determination device and/or of the communication device (29).

7. Method according to one of the preceding claims, **characterised in that** the assessment device is the vehicle system (28) of a motor vehicle (3, 4, 6, 8, 11, 12, 13, 14, 16, 17, 19, 23, 30), in particular of a motor vehicle (3, 4, 6, 8, 11, 12, 13, 14, 16, 17, 19, 23, 30) that is involved in a conflict, and the trajectory data of the at least one adjusted trajectory are transmitted via the vehicle specific communication device (29) to the motor vehicle (3, 4, 6, 8, 11, 12, 13, 14, 16, 17, 19, 23, 30) associated with the trajectory.

8. Method according to claim 7,
**characterised in that**
the motor vehicle (3, 4, 6, 8, 11, 12, 13, 14, 16, 17, 19, 23, 30) whose vehicle system (28) is the assessment device is determined at random.

9. Method according to claim 7,
**characterised in that**
through the communication device (29) of at least one of the motor vehicles (3, 4, 6, 8, 11, 12, 13, 14, 16, 17, 19, 23, 30) determination information, in particular priority information, is transmitted to determine the motor vehicle (3, 4, 6, 8, 11, 12, 13, 14, 16, 17, 19, 23, 30) whose vehicle system (28) is the assessment device.

10. Method according to one of claims 1 to 6,
**characterised in that**
the assessment device is a central device (15), wherein the central device (15) includes a communication device or is connected to this via a communication network, which communicates with the communication devices (29) of at least two motor vehicles (3, 4, 6, 8, 11, 12, 13, 14, 16, 17, 19, 23, 30), and the trajectory data of at least one adjusted trajectory are transmitted via the communication device (29) to the motor vehicle (3, 4, 6, 8, 11, 12, 13, 14, 16, 17, 19, 23, 30) associated with the trajectory (7, 9).

11. Method according to one of claims 1 to 6,
**characterised in that**
the assessment device is a decentralised network that includes in particular the vehicle systems (28) of each motor vehicle (3, 4, 6, 8, 11, 12, 13, 14, 16, 17, 19, 23, 30) that are involved in a conflict, or the vehicle system (28) of all vehicles (3, 4, 6, 8, 11, 12, 13, 14, 16, 17, 19, 23, 30).

12. Method according to claim 11,
**characterised in that**
the vehicle system (3, 4, 6, 8, 11, 12, 13, 14, 16, 17, 19, 23, 30) of at least one of the motor vehicles determines for at least one other motor vehicle (3, 4, 6, 8, 11, 12, 13, 14, 16, 17, 19, 23, 30) desired trajectories (25, 26), and these are exchanged via the decentralised network.

13. Method according to one of the preceding claims,
**characterised in that**
through the communication device (29) of at least one of the motor vehicles (3, 4, 6, 8, 11, 12, 13, 14, 16, 17, 19, 23, 30) at least one item of vehicle information is transmitted, in particular a position of the vehicle, the target position that the motor vehicle (3, 4, 6, 8, 11, 12, 13, 14, 16, 17, 19, 23, 30) should reach in particular within a time window or information on driving options, that describe possible driving manoeuvres, and/or priority information that is used as an input quantity of the assessment criterion for adjusting the at least one trajectory (7, 9).

14. Method according to one of the preceding claims,
**characterised in that**
through the communication device (29) of at least one of the motor vehicles (3, 4, 6, 8, 11, 12, 13, 14, 16, 17, 19, 23, 30) at least one item of environmental information is transmitted, in particular at least one determined position of a vehicle or obstacle.

15. Method according to one of the preceding claims,
**characterised in that**
in the case in which no adjustment of the at least one trajectory (7, 9) on the basis of the at least one assessment criterion for achieving the target position of the vehicles is possible, a determination of another assessment device is carried out, wherein the other assessment device is in particular a vehicle system (28) of a motor vehicle (3, 4, 6, 8, 11, 12, 13, 14, 16, 17, 19, 23, 30) not hitherto involved in the assessment process, or is a central device (15).

16. Method according to one of the preceding claims,
**characterised in that**
in the case in which no adjustment of the at least one trajectory (7, 9) on the basis of the at least one arbitration criterion for achieving the target position of the vehicles is possible, an alarm device is activated that notifies a person by means of an acoustic signal, a visual signal or a communication network.

17. Method according to one of the preceding claims,
**characterised in that**
in the case in which no adjustment of the at least one trajectory (7, 9) on the basis of the at least one arbitration criterion for achieving the target position of the vehicles is possible, the motor vehicles (3, 4, 6, 8, 11, 12, 13, 14, 16, 17, 19, 23, 30) are brought to a stop.

18. Method according to one of the preceding claims,
**characterised in that**
after adjusting the at least one trajectory (7, 9) by the assessment device the execution of the driving interventions of the trajectories (7, 9) is monitored, in particular by receiving transmitted position data and/or by sensor data, and if there is a deviation of at least one of the vehicles from the associated trajectory (7, 9) at least one trajectory (7, 9) is adjusted and is transmitted via the communication device (29) associated with the assessment device to the motor vehicle (3, 4, 6, 8, 11, 12, 13, 14, 16, 17, 19, 23, 30) associated with the trajectory (7, 9).

19. Motor vehicle (30), comprising at least one sensor (31) as well as a communication device (29) for vehicle-to-vehicle and/or vehicle-to-infrastructure communication, as well as a vehicle system (28), **characterised in that** the vehicle system is configured to participate in the method of one of the preceding claims.

## Revendications

1. Procédé pour la coordination du fonctionnement de véhicules automobiles roulant de manière complètement automatisée, constitué des étapes de :
- détermination d'une trajectoire (7, 9) décrite par au moins une intervention de conduite pour chaque véhicule automobile (3, 4, 6, 8, 11, 12, 13, 14, 16, 17, 19, 23, 30) à partir d'informations, qui décrivent l'état du véhicule automobile (3, 4, 6, 8, 11, 12, 13, 14, 16, 17, 19, 23, 30) y compris une position cible, et d'informations environnementales, qui décrivent l'environnement du véhicule automobile (3,4, 6, 8, 11, 12, 13, 14, 16, 17, 19, 23, 30), par un système de véhicule (28) du véhicule automobile (3, 4, 6, 8,11,12,13,14,16,17,19, 23, 30),
- détermination s'il existe au moins une condition de coordination montrant une coordination obligatoire, par le système de véhicule (28) du véhicule automobile (3, 4, 6, 8, 11, 12, 13,14, 16, 17, 19, 23, 30),
- si la condition de coordination existe ou si au moins une des conditions de coordination existe, la réalisation des étapes suivantes :
-- l'échange de données de trajectoire qui décrivent la trajectoire (7, 9), par l'intermédiaire d'une liaison de communication par un dispositif de communication (29) propre au véhicule de chaque véhicule automobile (3, 4, 6, 8, 11, 12, 13, 14, 16, 17, 19, 23, 30),
-- la vérification des données de trajectoire des véhicules automobiles (3, 4, 6, 8, 11, 12, 13, 14, 16, 17, 19, 23, 30) à la recherche de conflits qui existent en raison d'un chevauchement dans l'espace et dans le temps des trajectoires (7, 9) d'au moins deux des véhicules automobiles (3, 4, 6, 8, 11, 12, 13, 14, 16, 17, 19, 23, 30) et/ou une non-atteinte de la position cible d'au moins un des véhicules automobiles (3, 4, 6, 8, 11, 12, 13, 14, 16, 17, 19, 23, 30),
-- s'il existe un conflit :
l'adaptation de la trajectoire (7, 9) d'au moins un véhicule automobile (3, 4, 6, 8, 11, 12, 13, 14, 16, 17, 19, 23, 30) participant au conflit sur la base d'au moins une règle d'arbitrage qui est évaluée par un dispositif d'arbitrage, et la transmission de la trajectoire adaptée respective au véhicule automobile (3, 4, 6, 8, 11, 12, 13, 14, 16, 17, 19, 23, 30) respectif par l'intermédiaire du dispositif de communication (29) respectif, et
- la réalisation des interventions de conduite décrites par la trajectoire (7, 9) respective par chaque véhicule automobile (3, 4, 6, 8, 11, 12, 13, 14, 16, 17, 19, 23, 30), dans lequel les interventions de conduite décrites par la trajectoire adaptée respective sont réalisées par le véhicule automobile (3, 4, 6, 8, 11, 12, 13, 14, 16, 17, 19, 23, 30) dont la trajectoire (7, 9) a été adaptée.

2. Procédé selon la revendication 1, **caractérisé en ce que** la condition de coordination ou une des conditions de coordination est une détermination d'une condition de blocage montrant un blocage par le système de véhicule (28), dans lequel si une condition de blocage existe, le système de véhicule (28) est conçu en particulier pour déterminer une trajectoire (7, 9), qui ne peut être réalisée selon les informations d'environnement sans modification d'une position ou d'un déplacement prédit par le système de véhicule d'au moins un des autres véhicules automobiles.

3. Procédé selon la revendication 2, **caractérisé en ce que** la condition de blocage ou une des conditions de blocage est une détermination répétée d'une trajectoire (7, 9) qui n'atteint pas la position cible, pendant un laps de temps prédéfini ou pouvant être prédéfini.

4. Procédé selon la revendication 2 ou 3, **caractérisé en ce que** la condition de blocage ou une des conditions de blocage est que pendant un laps de temps prédéfini ou pouvant être prédéfini, un écart entre le véhicule automobile (3, 4, 6, 8, 11, 12, 13, 14, 16, 17, 19, 23, 30) et la position cible n'est jamais inférieur au plus petit écart entre le véhicule automobile (3, 4, 6, 8, 11, 12, 13, 14, 16, 17, 19, 23, 30) et la position cible avant le début de cet intervalle de temps.

5. Procédé selon l'une quelconque des revendications 2 à 4, **caractérisé en ce que** la condition de blocage ou une des conditions de blocage est un écart dans le temps ou dans l'espace par rapport à une trajectoire idéale qui est plus grand qu'un écart dans le temps ou dans l'espace prédéfini ou pouvant être prédéfini, dans lequel la trajectoire idéale est calculée en omettant au moins un véhicule automobile (3, 4, 6, 8, 11, 12, 13, 14, 16, 17, 19, 23, 30).

6. Procédé selon l'une quelconque des revendications précédentes, **caractérisé en ce que** la condition de coordination ou une des conditions de coordination est une situation du véhicule automobile (3, 4, 6, 8, 11, 12, 13, 14, 16, 17, 19, 23, 30) dans une zone qui est conçue pour la conduite coordonnée, dans lequel le système de véhicule (28) est conçu pour déterminer la situation dans une telle zone en particulier pour exploiter les données d'un dispositif de détermination de position et/ou du dispositif de communication (29).

7. Procédé selon l'une quelconque des revendications précédentes,
**caractérisé en ce que**
le dispositif d'arbitrage est le système de véhicule (28) d'un véhicule automobile (3, 4, 6, 8, 11, 12, 13, 14, 16, 17, 19, 23, 30), en particulier d'un véhicule automobile (3, 4, 6, 8, 11, 12, 13, 14, 16, 17, 19, 23, 30) participant à un conflit, et les données de trajectoire de l'au moins une trajectoire adaptée sont transmises au véhicule automobile (3, 4, 6, 8, 11, 12, 13, 14, 16, 17, 19, 23, 30) associé à la trajectoire par l'intermédiaire du dispositif de communication (29) propre au véhicule.

8. Procédé selon la revendication 7,
**caractérisé en ce que**
le véhicule automobile (3, 4, 6, 8, 11, 12, 13, 14, 16, 17, 19, 23, 30), dont le système de véhicule (28) est le dispositif d'arbitrage, est déterminé au hasard.

9. Procédé selon la revendication 7,
**caractérisé en ce que**
une information de détermination, pour déterminer le véhicule automobile (3, 4, 6, 8, 11, 12, 13, 14, 16, 17, 19, 23, 30) dont le système de véhicule (28) est le dispositif d'arbitrage, en particulier une information de priorité, est transmise par le dispositif de communication (29) d'au moins un des véhicules automobiles (3, 4, 6, 8, 11, 12, 13, 14, 16, 17, 19, 23, 30).

10. Procédé selon l'une quelconque des revendications 1 à 6,
**caractérisé en ce que**
le dispositif d'arbitrage est un dispositif central (15), dans lequel le dispositif central (15) comprend un dispositif de communication ou est relié à ce dernier par l'intermédiaire d'un réseau de communication, qui communique avec les dispositifs de communication (29) des au moins deux véhicules automobiles (3, 4, 6, 8, 11, 12, 13, 14, 16, 17, 19, 23, 30), et les données de trajectoire de l'au moins une trajectoire adaptée sont transmises au véhicule automobile (3, 4, 6, 8, 11, 12, 13, 14, 16, 17, 19, 23, 30) associé à la trajectoire (7, 9) par l'intermédiaire de ce dispositif de communication (29).

11. Procédé selon l'une quelconque des revendications 1 à 6,
**caractérisé en ce que**
le dispositif d'arbitrage est un réseau décentralisé, qui comprend en particulier les systèmes de véhicule (28) des véhicules automobiles (3, 4, 6, 8, 11, 12, 13, 14, 16, 17, 19, 23, 30) participant à un conflit, ou les systèmes de véhicule (28) de tous les véhicules (3, 4, 6, 8, 11, 12, 13, 14, 16, 17, 19, 23, 30).

12. Procédé selon la revendication 11,
**caractérisé en ce que**
le système de véhicule (3, 4, 6, 8, 11, 12, 13, 14, 16, 17, 19, 23, 30) d'au moins un des véhicules automobiles détermine des trajectoires souhaitées (25, 26) pour au moins un autre véhicule automobile (3, 4, 6, 8, 11, 12, 13, 14, 16, 17, 19, 23, 30), et celles-ci sont échangées par l'intermédiaire du réseau décentralisé.

13. Procédé selon l'une quelconque des revendications précédentes,
**caractérisé en ce que**
au moins une information de véhicule, en particulier une position du véhicule, la position cible, que le véhicule automobile (3, 4, 6, 8, 11, 12, 13, 14, 16, 17, 19, 23, 30) vise à atteindre, en particulier pendant une fenêtre de temps, les informations de possibilité de conduite, qui décrivent les manoeuvres de conduite possibles, et/ou une information de priorité, qui est utilisée comme grandeur d'entrée de la règle d'arbitrage pour l'adaptation de l'au moins une trajectoire (7, 9), est transmise par le dispositif de communication (29) d'au moins un des véhicules automobiles (3, 4, 6, 8, 11, 12, 13, 14, 16, 17, 19, 23, 30).

14. Procédé selon l'une quelconque des revendications précédentes,
**caractérisé en ce que**
au moins une information d'environnement, en particulier au moins une position déterminée d'un véhicule ou d'un obstacle, est transmise par le dispositif de communication (29) d'au moins un des véhicules automobiles (3, 4, 6, 8, 11, 12, 13, 14, 16, 17, 19, 23, 30).

15. Procédé selon l'une quelconque des revendications précédentes,
**caractérisé en ce que**
dans le cas dans lequel aucune adaptation de l'au moins une trajectoire (7, 9) sur la base de l'au moins une règle d'arbitrage pour atteindre les positions cibles des véhicules n'est possible, une détermination d'un autre dispositif d'arbitrage est réalisée, dans lequel l'autre dispositif d'arbitrage est en particulier un système de véhicule (28) d'un véhicule automobile (3, 4, 6, 8,11,12,13,14,16,17,19, 23, 30) ne participant jusqu'à présent pas au processus d'arbitrage ou un dispositif central (15).

16. Procédé selon l'une quelconque des revendications précédentes,
**caractérisé en ce que**
dans le cas dans lequel aucune adaptation de l'au moins une trajectoire (7, 9) sur la base de l'au moins une règle d'arbitrage pour atteindre les positions cibles des véhicules n'est possible, un système d'alarme est activé, qui prévient une personne par un signal sonore, un signal visuel ou un réseau de communication.

17. Procédé selon l'une quelconque des revendications précédentes,
**caractérisé en ce que**
dans le cas dans lequel aucune adaptation de l'au moins une trajectoire (7, 9) sur la base de l'au moins une règle d'arbitrage pour atteindre les positions cibles des véhicules n'est possible, une immobilisation des véhicules automobiles (3, 4, 6, 8, 11, 12, 13, 14, 16, 17, 19, 23, 30) est réalisée.

18. Procédé selon l'une quelconque des revendications précédentes,
**caractérisé en ce que**
après l'adaptation de l'au moins une trajectoire (7, 9) par le dispositif d'arbitrage, la réalisation des interventions de conduite des trajectoires (7, 9), en particulier par réception de données de position transmises et/ou par des données de capteur, est surveillée et lorsqu'au moins un des véhicules automobiles s'écarte de la trajectoire (7, 9) associée, au moins une trajectoire (7, 9) est adaptée et transmise au véhicule automobile (3, 4, 6, 8, 11, 12, 13, 14, 16, 17, 19, 23, 30) associé à la trajectoire (7, 9) par l'intermédiaire du dispositif de communication (29) associé au dispositif d'arbitrage.

19. Véhicule automobile (30), comprenant au moins un capteur (31) ainsi qu'un dispositif de communication (29) de véhicule à véhicule et/ou de véhicule à communication d'infrastructure, ainsi qu'un système de véhicule (28),
**caractérisé en ce que**
le système de véhicule est conçu pour participer au procédé selon l'une quelconque des revendications précédentes.
